# EUROPÄISCHE PATENTSCHRIFT

(11) **EP 3 609 774 B1**
(45) Veröffentlichungstag und Bekanntmachung des Hinweises auf die Patenterteilung: **04.11.2020**
(21) Anmeldenummer: 18718756.2
(22) Anmeldetag: 10.04.2018
(51) Int. Cl.: B62D 65/18, B62D 65/00

(54) **FÖRDEREINRICHTUNG FÜR EINE AUTOMATISIERTE FERTIGUNGSSTRASSE, BAUTEILTRÄGERWAGEN FÜR EINE FÖRDEREINRICHTUNG UND VERFAHREN ZUM BETRIEB EINER FÖRDEREINRICHTUNG**
CONVEYOR DEVICE FOR AN AUTOMATED PRODUCTION LINE, COMPONENT CARRIER CARRIAGE FOR A CONVEYOR DEVICE, AND METHOD FOR OPERATING A CONVEYOR DEVICE
DISPOSITIF DE TRANSPORT DESTINÉ À UNE CHAÎNE DE PRODUCTION AUTOMATISÉE, CHARIOT DE SUPPORT DE PIÈCES DESTINÉ À UN DISPOSITIF DE TRANSPORT ET PROCÉDÉ DE FONCTIONNEMENT D'UN DISPOSITIF DE TRANSPORT

(30) Priorität: 11.04.2017 DE 102017107822
(43) Veröffentlichungstag der Anmeldung: 19.02.2020
(73) Patentinhaber: Ebz Systec GmbH, 88212 Ravensburg (DE)
(72) Erfinder: STADLER, Rainer, 88605 Rast (DE)
(74) Vertreter: Otten, Roth, Dobler & Partner mbB Patentanwälte
(86) Internationale Anmeldenummer: PCT/EP2018/059119
(87) Internationale Veröffentlichungsnummer: WO 2018/189156

(56) Entgegenhaltungen:
- EP-B1- 2 560 861
- WO-A1-2016/150543
- DE-U1-202007 009 016
- FR-A1- 2 567 831
- GB-A- 2 220 396

## Beschreibung

Die Erfindung betrifft eine Fördereinrichtung für eine automatisierte Fertigungsstraße, einen Bauteilträgerwagen für eine Fördereinrichtung sowie ein Verfahren zum Betrieb einer Fördereinrichtung nach den unabhängigen Ansprüchen 1 bzw. 11 bzw. 15.

Fördereinrichtungen und Bauteilträgerwagen sind aus dem Stand der Technik, z.B. aus WO 16/150543 A1 oder der EP 2 560 861 B1 bekannt.

Insbesondere in der sogenannten Rohbaumontage von Fahrzeugkarosserien werden die verschiedenen Karosserieteile an mehreren Arbeitsstationen mit Hilfe von Robotern meist durch Punktschweißungen oder andere Verbindungsmethoden miteinander verbunden. Die Roboter sind dabei so programmiert, dass sie an genau definierten Koordinaten des Raumes ihre Verbindungen anbringen. Aufgabe einer Fördereinrichtung, welche die einzelnen Bauteile oder Bauteilgruppen an den Arbeitsstationen zur Verfügung stellt ist es, die Bauteile oder Bauteilgruppen präzise, oftmals auf den Bruchteil von Millimetern genau an die richtige Stelle zu führen, sodass die den Robotern vorgegebenen Koordinaten und die Position des Werkstücks aus Bauteilen oder Bauteilgruppen möglichst exakt übereinstimmt. Die Positionierung des Werkstücks erfolgt dabei entlang dreier Raumrichtungen X, Y, Z, indem ein Bauteilträgerwagen als Bestandteil der Fördereinrichtung ausgerichtet wird. Der Bauteilträgerwagen fährt hierbei in die Arbeitsstation ein und muss dann entlang seiner Bewegungsrichtung (X), quer zur Bewegungsrichtung (Y) und in der Vertikalen (Z) ausgerichtet werden.

Erhebliche Problemstellungen sind in der Regel durch die einerseits kompakte Bauweise, um möglichst viel Raum für die Bearbeitungsautomaten, insbesondere Industrieroboter bereit zu stellen, andererseits durch die geforderte Präzision bei der Positionierung in einzelnen Arbeitsstationen gegeben.

Aufgabe der Erfindung ist es somit, die bekannten Fördereinrichtungen hinsichtlich ihres Bauraumes und der exakten Positionierung zu verbessern.

Die Erfindung betrifft somit eine Fördereinrichtung für eine automatisierte Fertigungsstraße umfassend:
- mindestens eine Förderbahn entlang eines Verlaufs der Fertigungsstraße,
- mindestens einen Bauteilträgerwagen zum Transport von Bauteilen oder Bauteilgruppen, insbesondere Karosserien, in der Fertigungsstraße,
- wobei die Fertigungsstraße Transferabschnitte und Arbeitsstationen umfasst und diese von der Förderbahn entlang des Verlaufs der Fertigungsstraße durchlaufen werden.

Die Erfindung ist dadurch gekennzeichnet, dass
- die Förderbahn als Einspurbahn, bevorzug entlang einer zentrischen Längsachse des Bauteilträgerwagens verlaufende Einspurbahn ausgebildet ist und
- die Förderbahn eine Mehrzahl von Rollen aufweist, welche zumindest teilweise über Antriebe angetrieben sind und
- dass der Bauteilträgerwagen mindestens eine Reibfläche umfasst, über welche der Bauteilträgerwagen durch die Rollen der Förderbahn antreibbar, insbesondere entlang der Förderbahn dynamisch bewegbar ist.

Durch den Aufbau als Einspurbahn, welche bevorzugt entlang der Längsachse eines Bauteilträgerwagens verläuft und welche mit Ihrer Spurrichtung die Richtung einer Fertigungsstraße definiert wird erheblich weniger Raumbedarf für den Aufbau der Bahn benötigt, so dass mehr Bauraum für Arbeitsstationen, insbesondere Roboter zur Verfügung steht. Der Antrieb des Bauteilträgerwagens über eine Reibfläche durch Rollen aus der Förderbahn konzentriert wiederum Antriebstechnologie in der Förderbahn und bietet die Möglichkeit, kompakte Bauteilträgerwagen mit verbesserter Zugangsmöglichkeit für Roboter zu dem zu bearbeitenden Bauteil oder der Bauteilgruppe, insbesondere der Karosserie bereit zu stellen.

Eine vorteilhafte Weiterbildung der erfindungsgemäßen Fördereinrichtung ist dadurch gekennzeichnet, dass
- am Bauteilträgerwagen Positioniermittel vorgesehen sind,
- und an der Förderbahn zumindest im Bereich einer Arbeitsstation Referenzmittel vorgesehen sind,
- wobei die Positioniermittel am Bauteilträgerwagen und die Referenzmittel der Förderbahn derart zusammenwirken, dass der Bauteilträgerwagen in einer Arbeitsposition, in welcher die Bearbeitung der Bauteile oder Bauteilgruppen durch wenigstens einen Manipulator vorgesehen ist, relativ zur Arbeitsstation in einer, vorzugsweise zwei, insbesondere drei Raumrichtungen eindeutig positioniert ist.

Die exakte Positionierung des Bauteilträgerwagens in der Arbeitsstation erlaubt es den Manipulatoren, insbesondere den Industrierobotern, exakt vorgegebene Koordinaten anzusteuern, um Bearbeitungsaufgaben zu erfüllen. Die Positionierung in mindestens einer, vorzugsweise allen drei Raumrichtungen erfolgt über das Zusammenwirken von Positionier- und Referenzmitteln, welche insbesondere justierbar sind und nach Montage der Fördereinrichtung am Arbeitsort in jeder Arbeitsstation auf die geforderte Toleranz eingestellt werden können. Besonders bevorzugt sind hierbei Positionierflächen oder Positionierblöcke vorgesehen, die an einer oder zwei Kontaktflächen gegen Referenzrollen fahren und daran anliegen, wenn die exakte Position erreicht ist. Auch andere Arten von mechanischen Anschlägen sind hier denkbar.

In einer Weiterbildung der Fördereinrichtung ist überdies dass Führungseinheiten umfasst sind, wobei die Rollen der Fördereinrichtung zumindest teilweise Bestandteile einzelner Führungseinheiten sind und die Rollen einer Führungseinheit gefederte oder ungefederte bzw. starre Aufhängungen umfassen, wobei die Führungseinheiten vorzugsweise im Bereich einer Arbeitsstation angeordnet sind.

Der über die Reibfläche angetriebene Bauteilträgerwagen wirkt mit den angetriebenen Rollen zusammen, um entlang der Förderbahn durch die Arbeitsstationen und zwischen den Arbeitsstationen bewegt zu werden. Teilweise werden die angetriebenen Rollen dabei in Führungseinheiten aufgenommen, wobei die Führungseinheiten, welche den Bauteilträgerwagen entlang der Förderbahn bewegen, und über diese hinweg zumindest entlang der Förderbahn (X-Achse) führen. Diese Führungseinheiten sind zumindest teilweise mit einer Federung für die Aufhängung der Rollen ausgestattet, so dass zum einen eine Änderung der Bewegungsebene, gebildet aus der Bewegungsrichtung (X-Achse) und einer dazu rechtwinkligen, in der horizontalen liegenden Querachse (Y-Achse), möglich ist, und zum anderen eine Vorspannung bzw. Anpressung der Antriebsrollen an die Reibfläche einstellbar ist, deren Wirkungskraft die Gewichtskraft der Bauteilträgerwagens mit darauf angeordneten Bauteilen oder Bauteilgruppen übersteigt.

Des Weiteren ist in einer vorteilhaften Ausführungsform der Fördereinrichtung vorgesehen, dass eine Positionierung entlang des Verlaufs der Förderbahn (X-Richtung) durch mindestens einen Abstecker erfolgt, wobei der Abstecker bevorzugt aus der Förderbahn herausragend in eine Aufnahme am Bauteilträgerwagen formschlüssig eingreift.

Derartige Abstecker können den Bauteilträgerwagen einfangen und durch entsprechende konische Spitzenausbildung in eine gewünschte Position bringen. Sie sind schnell zu betätigen und können ggf. in eingebrachtem Zustand große Kräfte aufnehmen.

Überdies ist bevorzugt vorgesehen, dass eine Positionierung senkrecht zum Verlauf der Förderbahn (Z-Richtung) durch mindestens zwei Positioniermittel, insbesondere Z-Pakete am Bauteilträgerwagen in Zusammenwirkung mit mindestens zwei Referenzmitteln, insbesondere zwei Z-Anschlägen oder Z-Rollen erfolgt.

Die Z-Positionierung, also die Positionierung in senkrechter Richtung (Z-Achse) bietet sich über Positionierflächen / Positionierpakete am Bauteilträgerwagen oder der Arbeitsstation an, welche mit Referenzmitteln an der jeweils anderen Komponente durch mechanisches Anliegen zusammen wirken.

Bevorzugt wirken dabei die Positioniermittel mit einer nach oben weisenden Fläche mit einer nach unten weisenden Fläche oder Rolle der Referenzmittel zusammen. Dieses eintauchen in einer Endposition durch Zusammenwirken einer gegenüberliegenden, nach unten verdrängenden Flächenpaars oder einer Positionierfläche mit einer nach unten verdrängenden Rolle erlaubt, insbesondere gegen die Wirkung von gefedert aufgehängten Antriebsrollen eine exakte Positionierung in der senkrechten Achse (Z-Richtung). Diese Positionierung ist gegenüber einer aufliegenden Positionierung besonders vorteilhaft, da Hebemomente, z.B. durch Manipulatoren, kompensiert werden können, ohne dass die exakte Position gefährdet ist. Der Bauteilträgerwagen wird in Z-Richtung klemmend gehalten.

Überdies ist bevorzugt vorgesehen, dass eine Positionierung quer zum Verlauf der Förderbahn (Y-Richtung) durch mindestens zwei Abstecker erfolgt, wobei die Abstecker voneinander beabstandet sind und bevorzugt aus der Förderbahn herausragend in eine Aufnahme am Bauteilträgerwagen formschlüssig eingreife.

Die Vorteile von Absteckern sind oben beschrieben. Durch zwei Punkte mit Absteckern kann eine Orientierung des Bauteilträgerwagens in X-Richtung und Y-Richtung eindeutig erfolgen. Diese können simultan oder nacheinander folgend auf den Bauteilträgerwagen einwirken.

Überdies ist bevorzugt vorgesehen, dass eine Positionierung quer zum Verlauf der Förderbahn (Y-Richtung) durch mindestens zwei Positioniermittel, insbesondere Y-Pakete am Bauteilträgerwagen in Zusammenwirkung mit mindestens zwei Referenzmitteln, insbesondere zwei Y-Anschlägen oder Y-Rollen erfolgt.

Entsprechend der Z-Positionierung kann auch die Y-Positionierung durch entsprechende Positionierpakete erfolgen, die gegen Rollenflächen oder in Rollenpaare einfahren und damit eine exakte Position im Raum entlang der Y-Achse herbeiführen.

Eine weitere Ausführungsform der erfindungsgemäßen Fördereinrichtung sieht vor, dass die Positionierung des Bauteilträgerwagens relativ zur Arbeitsstation entlang einer, vorzugsweise zwei, insbesondere drei Raumrichtungen formschlüssig ausgebildet ist, so dass insbesondere ein Abheben des Bauteilträgerwagens von der Förderbahn verhindert ist.

Durch insgesamt einen Formschluss ausbildenden Positionierungsmittel wird erreicht, dass der Bauteilträgerwagen in der Arbeitsstation ortsfest gehalten wird und insbesondere einwirkenden Kräften durch die Manipulatoren, z.B. Industrieroboter, standhält. Dadurch wird die Präzision bei der Bearbeitung weiter verbessert und eine verringerte Störungs- bzw. Fehlerquote erzielt.

Es ist insbesondere auch vorgesehen, dass zur Fixierung des Bauteilträgerwagens in einer Arbeitsstation in Z-Richtung mindestens drei und vorzugsweise 4 Positionier- und Referenzmittel zusammenwirken.

Es ist insbesondere auch vorgesehen, dass zur Fixierung des Bauteilträgerwagens in einer Arbeitsstation in Y-Richtung mindestens drei und vorzugsweise 4 Positionier- und Referenzmittel zusammenwirken.

Überdies ist in der Erfindung vorgesehen, dass die Fördereinrichtung an der Förderbahn in Längsrichtung verlaufend mindestens ein Profil, vorzugsweise zwei oder mehrere Profile ausgebildet sind, wobei mindestens eine Rolle, bevorzugt eine Rollenanordnung an dem Bauteilträgerwagen derart in das Profil formschlüssig eingreift, dass ein Abheben des Bauteilträgerwagens von der Förderbahn und/oder ein seitlicher Versatz des Bauteilträgerwagens gegenüber der Förderbahn verhindert ist.

Ein Profil, z.B. ein Strangprofil oder eine C-Schiene, welches von Rollen umgriffen wird oder in welches eine Rolle eingreift, stellt einen Formschluss für die Beförderung des Bauteilträgerwagens dar, so dass ein Kippen oder Abgeben des Bauteilträgerwagens verhindert wird.

Insbesondere im Fall einer federbelasteten Rolle, welche gegen den Bauteilträgerwagen an seiner Reibfläche andrückt, kann durch die formschlüssige Aufnahme mindestens einer Rolle in einer C-Schiene, wobei die Rolle an der oberen Flanke der C-Schiene anliegt und bei Bewegung abrollt, eine besonders stabile, gegen Abheben und Kippen gesicherte Führung bereit gestellt werden.

In einer bevorzugten Ausführung verläuft die Einspurbahn unterhalb des Bauteilträgerwagens, insbesondere zentrisch unterhalb des Bauteilträgerwagens. Es sind aber auch Ausführungen denkbar, bei denen ein seitlicher Versatz zweckmäßig ist. Insbesondere die für die Manipulatoren zugänglich zu haltenden Stellen bestimmen die Anordnung der Komponenten der Fördereinrichtung.

Es ist auch vorgesehen, den Transferabschnitt und/oder die Arbeitsstation der Förderbahn mit einer Vielzahl von Niederhaltern auszustatten, wobei jeder Niederhalter eine Niederhalterolle und einen Rollenträger umfasst, wobei die Niederhalterolle mittels des Rollenträgers an einem Profil der Förderbahn angeordnet ist und wobei die Niederhalterrollen derart auf die Rollen der Förderbahn ausgerichtet sind, dass ein die Förderbahn entlang fahrender Bauteilträgerwagen ständig zwischen mehreren Niederhalterrollen und mehreren Rollen führbar ist, wobei es insbesondere vorgesehen ist, dass jeweils zwei Niederhalter an dem Profil der Förderbahn gegenüberliegend angeordnet sind. Hierdurch ist es mit geringem Aufwand möglich, auch bei einem Antrieb des Bauteilträgerwagens mit ungefederten bzw. starr gelagerten Rollen einen hinreichenden Reibschluss zwischen dem Bauteilträgerwagen und den jeweils antreibenden Rollen herzustellen, so dass der Bauteilträgerwagen mittels der angetriebenen Rollen sicher beschleunigt und abgebremst werden kann und zusätzlich gegen ein seitliches Kippen gesichert ist.

Es ist auch vorgesehen, den Niederhalter mit einer Feder auszustatten, wobei die Niederhalterrolle mittels der Feder derart gegen eine Oberfläche eines die Förderbahn entlang fahrenden Bauteilträgerwagens drückbar ist, dass der Bauteilträgerwagen auf die Rollen gedrückt wird, auf welchen der Bauteilträgerwagen aufliegt, wobei es insbesondere vorgesehen ist, dass der Niederhalter einen Hebel umfasst und die Niederhalterrolle mittels des Hebels an dem Profil der Förderbahn schwenkbar um eine horizontal in Y-Richtung (Y) verlaufende Schwenkachse angelenkt ist und die Feder den Hebel mit dem Profil derart verbindet, dass diese eine Drehmoment um die Schwenkachse erzeugt und wobei es insbesondere auch vorgesehen ist, dass zwei gegenüberliegend angeordneten Niederhalter im Bereich ihrer Schwenkachse durch ein Verbindungsmittel verbunden sind, wobei die beiden Hebel insbesondere derart mit dem Verbindungsmittel verbunden sind, dass diese unabhängig voneinander um ihre Schwenkachsen schwenkbar sind. Durch den Einsatz einer Feder an jedem Niederhalter können Toleranzen ausgeglichen und Schwingungen gedämpft werden, so dass eine ruhige Bewegung des Bauteilträgerwagens möglich ist. Durch die Verwendung von Hebeln als Rollenträger können auch mit schwächeren Federn hinreichende Kräfte erzeugt werden, so dass kostengünstige Federn Verwendung finden können und auch ein Austausch der Federn vereinfacht ist. Durch eine Verbindung von Gegenüberliegenden Niederhaltern wird mit minimalem Materialeinsatz eine insbesondere gegen Torsionskräfte robustere Bauform erreicht.

Weiterhin ist es vorgesehen, dass die Fördereinrichtung eine Absteckeinrichtung umfasst, wobei Absteckeinrichtung einen insbesondere als Schwert ausgebildeten Abstecker und einen Köcher zur Aufnahme des Absteckers umfasst, wobei der Köcher quer zu einer Sperrrichtung (X-Richtung) insbesondere in Z-Richtung (Z) aus einer Freigabestellung in eine Sperrstellung verfahrbar ist, in welcher der Abstecker von dem Köcher aufgenommen ist, wobei es insbesondere vorgesehen ist, dass der Köcher zwei gegenüberliegend angeordnete Wälzkörper umfasst, wobei es insbesondere vorgesehen ist, dass Drehachsen der Wälzkörper derart quer zu der Verfahrrichtung (X) angeordnet sind, dass der Abstecker reibungsarm von dem Köcher aufgenommen wird, wenn dieser in die Sperrstellung fährt, wobei es insbesondere vorgesehen ist, dass der Abstecker an einem Bauteilträgerwagen montierbar ist, welcher auf der Förderbahn verfahrbar ist. Eine derartige Absteckeinrichtung lässt sich einfach in das Profil der Förderbahn integrieren. Weiterhin kann eine derartige Absteckeinrichtung mit geringen Antriebskräften betrieben werden, da die Reibkräfte durch die Wälzkörper reduziert sind.

Schließlich ist es bei der Fördereinrichtung vorgesehen, diese mit wenigstens einer Kupplungseinrichtung auszustatten, wobei die Kupplungseinrichtung wenigstens ein in einer der Arbeitsstationen der Fördereinrichtung angeordnetes Kupplungsstück und ein an einem Bauteilträgerwagen montierbares Gegenkupplungsstück umfasst, wobei das Kupplungsstück insbesondere zusammen mit einem Köcher einer Absteckeinrichtung derart verfahrbar ist, dass das Kupplungsstück mit dem Gegenkupplungsstück des in der Arbeitsstation in einer Arbeitsstellung stehenden Bauteilträgerwagens kuppelbar ist, wobei die Kupplungseinrichtung insbesondere eine Medienkupplungseinrichtung umfasst, mittels welcher der Bauteilträgerwagen vorzugsweise mit Druckluft und/oder Elektrizität versorgbar ist. Auf diese Weise können mit minimalen Aufwand an dem Bauteilträgerwagen insbesondere in jeder Arbeitsstation zusätzliche Funktionen realisiert werden, für welche der Bauteilträgerwagen aktive Komponenten benötigt.

Erfindungsgemäß ist auch ein Bauteilträgerwagen für eine oben beschriebene Fördereinrichtung vorgesehen. Dieser Bauteilträgerwagen umfasst:
- eine Trägerstruktur und Aufnahmemittel für Bauteile oder Bauteilgruppen,
- wobei die Trägerstruktur mindestens einen Längsträger und wenigstens zwei seitlich, bevorzugt symmetrisch nach Art eines Lothringer Kreuzes, über den Längsträger überstehende Querträger umfasst,
- wobei die Aufnahmemittel die Bauteile oder Bauteilgruppen, insbesondere eine Fahrzeugkarosserie relativ zu der Trägerstruktur eindeutig positioniert aufnehmen.
Der Bauteilträgerwagen ist erfindungsgemäß dadurch gekennzeichnet, dass
- die Trägerstruktur ein Befestigungsraster umfasst, in welchem die Querträger an wählbarer Position (bevorzugt in X-Richtung) angeordnet und befestigt sind,
   und/oder
- die Querträger ein Befestigungsraster umfassen, in welchem die Aufnahmemittel in mindestens einer Raumrichtung (bevorzugt in Y-Richtung), insbesondere zwei Raumrichtungen (Y- und Z-Richtung) an wählbarer Position, angeordnet und befestigt sind.

Da sich die aufzubauenden Bauteile oder Bauteilgruppen, insbesondere die Karosserieformen, durch Modellreihen oder Modellpflege ändern können, ist eine flexible Anpassbarkeit der Bauteilträgerwagen an die aufzunehmenden Bauteile oder Bauteilgruppen kostensparend. Besonders vorteilhaft ist dabei, dass sowohl die X-Richtung als auch die anderen Raumrichtungen eine flexible Anordnung der Komponenten des Bauteilträgerwagens erlauben. Ein Raster an Befestigungsmöglichkeiten gibt dem System des Bauteilträgerwagens eine hohe Flexibilität und dem Nutzer einen technischen Vorteil durch geringere Umrüstkosten, welche ansonsten ggf. durch komplett neu aufgebaute Bauteilträgerwagen realisiert werden müssten.

Eine bevorzugte Ausführungsform sieht vor, dass das Befestigungsraster an der Trägerstruktur über mindestens 60%, bevorzugt mindestens 80% der Länge der Trägerstruktur ausgebildet ist.

Auf dieser Länge kann eine nahezu vollständige Abdeckung der notwendigen Anordnungen für aufzunehmende Bauteile oder Bauteilgruppen, insbesondere Karosserien bereitgestellt werden.

Eine besondere Ausführungsform des Bauteilträgerwagens sieht vor, dass an mindestens einem Querträger sowohl mindestens ein Aufnahmemittel die Bauteile oder Bauteilgruppen sowie mindestens ein Positioniermittel zur Ausrichtung des Bauteilträgerwagens relativ zur Arbeitsstation angeordnet ist.

Die kombinierte Anordnung von Positioniermitteln für den Bauteilträgerwagen und Aufnahmemitteln für aufzunehmende Bauteile oder Bauteilgruppen reduziert die Anzahl von Querträgern und gibt dadurch mehr Raum für die Anwendung von Manipulatoren, insbesondere Industrierobotern frei. Insbesondere wird darüber hinaus durch die oben beschriebene klemmende, formschlüssige Positionierung eine exaktere, raumfestere Anordnung der Bauteile, bzw. Bauteilgruppen erreicht.

In einer weiteren bevorzugten Ausführung ist vorgesehen, dass
- der Längsträger im Querschnitt kopfstehend T-förmig ausgebildet ist, insbesondere aus einem Hohlprofil und einem vorzugsweise darunter angeordneten Flachprofil gebildet ist,
- wobei das Flachprofil bevorzugt beidseitig und insbesondere symmetrisch über das Hohlprofil übersteht und
- wobei die dem Hohlprofil gegenüberliegende Seite des Flachprofils eine Reibfläche bzw. Antriebsfläche bildet, welche von Rollen einer Fördereinrichtung antreibbar ist.

Der Antrieb über eine Reibfläche bietet Zugang zu hoher Dynamik beim Beschleunigen und Abbremsen des Bauteilträgerwagens. Darüber hinaus können durch die Reibfläche nahezu sämtliche Antriebsmittel auf die Förderbahn verlegt werden. Ein Bauraum für beispielsweise Laufrollen im Bereich der Auflage des Bauteilträgerwagens ist nicht erforderlich und steht für die Anbindung von Querträgern oder dergleichen zur Verfügung. Dadurch wird der Bauteilträgerwagen kompakter und gibt mehr Raum für die Anwendung von Manipulatoren, insbesondere Industrierobotern frei.

Des Weiteren schlägt die Erfindung ein Verfahren zum Betrieb einer oben beschriebenen Fördereinrichtung vor, wobei
- ein Bauteilträgerwagen auf einer Förderbahn bis in eine zu erreichende Arbeitsposition in eine Arbeitsstation einfährt und dabei ein
- Eintauchen aus einer horizontalen Transportebene, in welcher der Transport zwischen mindestens zwei Arbeitsstationen stattfindet, in eine unterhalb der Transportebene liegende Positionierebene, in welcher die Bearbeitung der Bauteile oder Bauteilgruppen, insbesondere der Karosserie auf dem Bauteilträgerwagen erfolgt, stattfindet.

Das erfindungsgemäße Eintauchen in die Z-Positionierung durch Wechsel von einer Transportebene in eine darunter liegende Positionierebene erlaubt ein formschlüssiges Klemmen von Positioniermitteln gegen federbelastete Antriebsrollen in Führungseinheiten, wodurch ein Abheben vermieden und eine besonders exakte Z-Positionierung ermöglicht wird.

Eine bevorzugte Ausführung des Verfahrens ist dadurch gekennzeichnet, dass die Bewegungsdynamik einen Wechsel zwischen zwei positionierten Zuständen in den Arbeitsstationen unter 12s, bevorzugt zwischen 5s und 10s, insbesondere innerhalb von 6s durchgeführt wird.

Das Einfahren in eine Positionierebene, ebenso wie in eine Y-Positionierung erfolgt während der Bewegung und nimmt keinen extra Zeitraum in Anspruch. Das Einbringen eines Absteckers zur X-Positionierung benötigt ca. 0,5s bis 1s und muss bei stehendem Bauteilträgerwagen erfolgen. Durch die Positionierung in einer, vorzugsweise zwei Raumachsen während der Dynamik der Bewegung (Abbremsen) wird ein Zeitvorteil gegenüber einer Positionierung erreicht, welche erst innerhalb der Arbeitsstation nach erfolgtem Einfahren erfolgt. Eine verkürzte Taktzeit lässt mehr zeitlichen Raum für die Bearbeitung durch Manipulatoren, insbesondere Industrieroboter.

Im Sinne der Erfindung wird unter einer Einspurbahn eine Förderbahn verstanden, welche in Längserstreckung nur ein Profil umfasst, welches aus einer Vielzahl von aneinandergereihten Profilabschnitten gebildet ist. Die Einspurbahn umfasst eine Vielzahl von an dem Profil gelagerten Rollen, auf welchen der wenigstens eine Bauteilträgerwagen rollt. Hierbei kann es auch vorgesehen sein, dass zwei oder mehr Rollen nebeneinander angeordnet sind. Durch eine parallele Anordnung von Rollen lässt sich die Kontaktfläche zu dem Bauteilträgerwagen auf eine einfache Weise verbreitern.

Die Erfindung wird anhand des nachfolgenden Ausführungsbeispiels näher erläutert. Die Erfindung ist jedoch nicht auf die dargestellte Ausführungsform beschränkt.

Es zeigen:
- Fig. 1: eine erste Ausführungsvariante einer erfindungsgemäßen Fördereinrichtung;
- Fig. 2: einen schematischen Teilschnitt durch die in der Figur 1 gezeigte erfindungsgemäße Fördereinrichtung entlang der Y-Z-Ebene
- Fig. 3a/b: eine schematische Schnittdarstellung der a) Positionierebene und b) Transportebene;
- Fig. 4: eine perspektivische Darstellung des in der Figur 1 gezeigten Bauteilträgerwagens;
- Fig. 5: eine perspektivische Darstellung eines Details einer Förderbahn einer zweiten Ausführungsvariante einer erfindungsgemäßen Fördereinrichtung und
- Fig. 6: eine perspektivische Darstellung eines Details einer Förderbahn einer dritten Ausführungsvariante einer erfindungsgemäßen Fördereinrichtung.

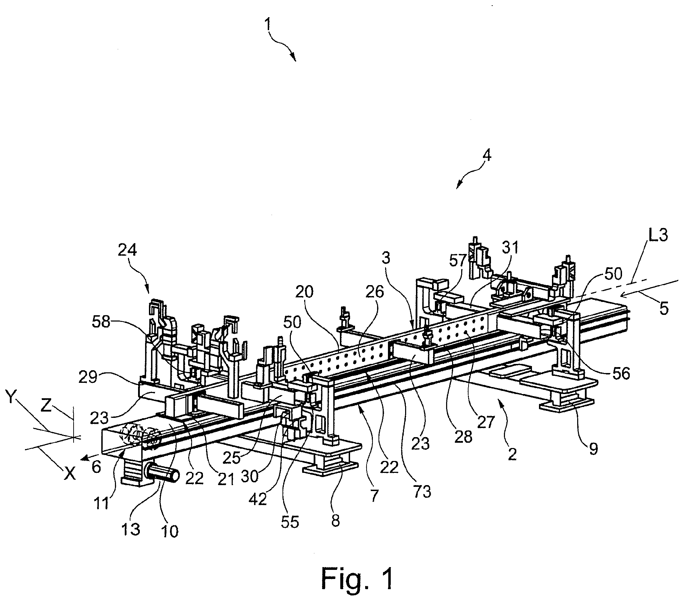

Im Einzelnen zeigt Fig. 1 eine erste Ausführungsvariante einer erfindungsgemäßen Förderereinrichtung 1, welche eine Förderbahn 2 sowie einen Bauteilträgerwagen 3 mit einer zentrischen Längsachse L3 umfasst. Die exemplarisch dargestellte Fördereinrichtung 1 repräsentiert vorliegend den Bereich einer Arbeitsstation 4 im Verlauf einer Fertigungsstraße. Die Bauteilträgerwagen 3 werden aus der Verlaufsrichtung 5 in den Bereich der Arbeitsstation 4 eingebracht und verlassen diese wiederum in Richtung des weiteren Verlaufs 6 der Fertigungsstraße.

Die Förderbahn 2 ist vorliegend als Einspurbahn 7 (engl. Monorail) ausgebildet. Sie umfasst ein auf Stützen 8, 9 angeordnetes Profil 10, in welchem beabstandet zueinander Rollen bzw. Rollenpaare 11, zumindest teilweise in Führungseinheiten 12 mit gefederter Aufhängung aufgenommenen Rollenpaare 11 angeordnet sind. Die Rollen bzw. Rollenpaare 11 werden über einen Antrieb 13 drehend angetrieben, um den Bauteilträgerwagen 3 entlang der Förderbahn 2 dynamisch zu bewegen. Das Profil 10 umfasst abhängig von einer Länge und einem Verlauf der Förderbahn 2 eine Vielzahl von aneinandergereihten Profilabschnitten.

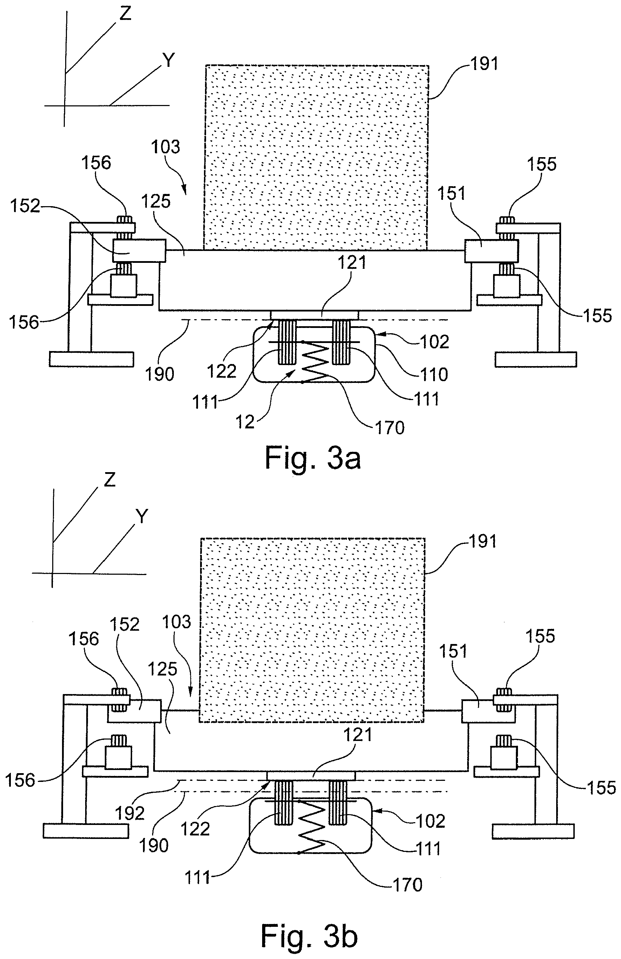

Der Bauteilträgerwagen 3 umfasst wiederum ein zentrisch angeordnetes Hohlprofil 20, welches auf seiner Unterseite an ein Flachprofil 21 angebunden ist. Das Flachprofil 21 bildet auf seiner Unterseite eine Reibfläche 22 aus, welche in Zusammenwirkung mit den Rollen bzw. Rollenpaaren 11 und dem Antrieb 13 eine dynamische Bewegung des Bauteilträgerwagens 3 ermöglicht. Entsprechende Führungseinheiten 12 (siehe Figur 3a) mit gefedert aufgehängten angetriebenen Rollen bzw. Rollenpaaren 11 sind in regelmäßigen Abständen entlang der Förderbahn 2 angeordnet, um stets eine Antreibbarkeit des Bauteilträgerwagens 3 zu gewährleisten.

Der Bauteilträgerwagen 3 umfasst weiterhin Querträger 23, 25, welche wiederum Aufnahmemittel 24 für Bauteile oder Bauteilgruppen, insbesondere eine nicht dargestellte Karosserie eines Fahrzeugs, tragen. Ein Teil der Querträger, nämlich die Querträger 25 umfassen neben Aufnahmemitteln 24 auch Positionsmittel 30, welche vorliegend zur Positionierung entlang der Y-Achse am vorderen, in Bewegungsrichtung linksseitigen Abschnitt des Bauteilträgerwagens 3 vorgesehen sind.

Entlang des Flachprofils 21 ist ein Befestigungsraster 26, vorliegend gebildet aus regelmäßigen Gewindebohrungen 27 zur Befestigung der Querträger 23 vorgesehen. Entweder unmittelbar im Flachprofil 21 oder über entsprechende Zusatzbauteile wie z.B. Winkelelemente kann ein weiteres Befestigungsraster 28 auf dem Flachprofil 21 ebenfalls mit Gewindebohrungen vorgesehen sein. Auf diese Weise können die Querträger 23 flexibel positioniert und angepasst an das aufzunehmende Bauteil bzw. die Bauteilgruppe umgebaut werden. Auch die Querträger 23 umfassen entsprechende Aufnahmen 29, z.B. in Form von Klemmprofilen, zur flexiblen Positionierung und Fixierung der Aufnahmemittel 24.

Bei der Einfahrt des Bauteilträgerwagens 3 in den Bereich der Arbeitsstationen 4 aus dem Verlauf 5 der Fertigungsstraße erreicht dieser die in Figur 1 dargestellte Arbeitsstellung. Dabei sind die Positionierungsmittel im Eingriff mit entsprechenden Referenzmitteln, was im Folgenden näher beschrieben wird.

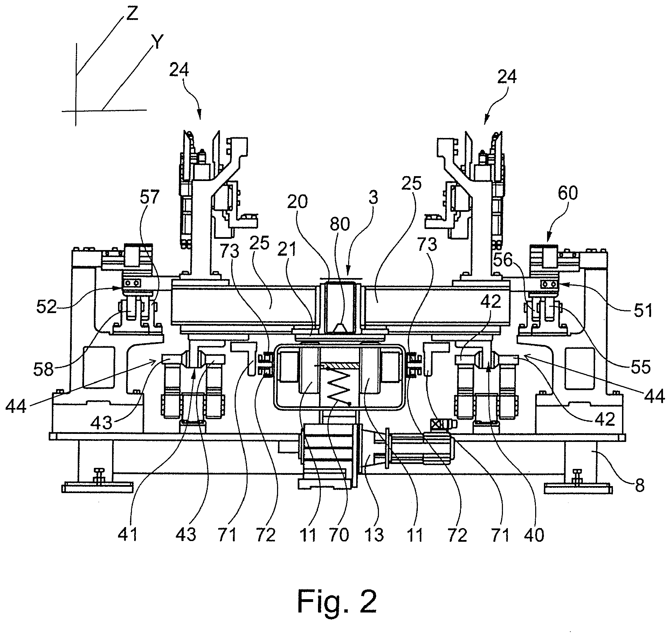

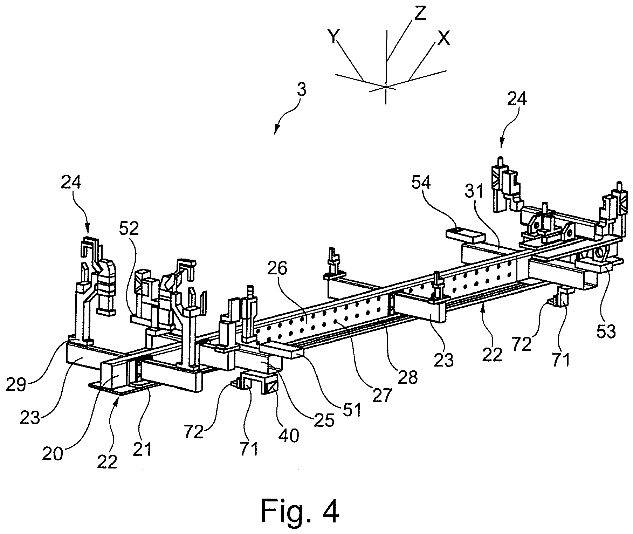

Zur Positionierung horizontal quer zur Verlaufsrichtung 5, 6 der Fertigungsstraße, somit zur Positionierung entlang der Y-Achse, sind am vorderen, in Fahrtrichtung linksseitigen Querträger 25 Positioniermittel 30 vorgesehen. Am hinteren, in Fahrtrichtung rechtsseitigen Querträger 31 sind entsprechende Y-Positioniermittel vorgesehen, welche vorliegend durch die Darstellung verdeckt sind. Die Y-Positioniermittel sind durch sogenannte Y-Pakete 40, 41 (siehe insbesondere Figuren 2 und 4) gebildet, welche in Y-Referenzrollen 42, 43 mit vertikal im Raum stehender Drehachse einfahren und dort exakt, in Y-Richtung formschlüssig aufgenommen werden. Durch die zwei Referenz-Rollenpaare nämlich Y-Referenzrollen 42 (vorne links) sowie Y-Referenzrollen 43 (hinten rechts) ist die Y-Lage des Bauteilträgerwagens 3 bestimmt. Die Y-Referenzrollen 42 und die Y-Referenzrollen 43 bilden jeweils Y-Referenzmittel 44.

Gemäß einer Ausführungsvariante ist alternativ zu der beschriebenen diagonalen Anordnung der Referenz-Rollenpaare auch eine versetzt hintereinander liegende Anordnung auf einer linken oder rechten Seite des Profils 10 vorgesehen.

In entsprechender Art und Weise fahren auch Z-Positioniermittel, welche die Position in der senkrechten Achse bestimmen, in entsprechende Referenzmittel ein. Die Z-Positioniermittel 50 in Form von Z-Paketen 51-54 (siehe insbesondere Figur 4) sind im Bereich der 4 Ecken des Bauteilträgerwagens 3 an Querträgern 25 mit Positioniermitteln angeordnet. Die Z-Pakete 51-54 fahren in entsprechende Z-Rollen 55-58 (siehe insbesondere Figur 1) ein und werden durch die Z-Referenzmittel 60 (siehe insbesondere Figur 2), gebildet aus den jeweiligen Z-Rollen in Z-Richtung ebenfalls formschlüssig gehalten.

Das Zusammenwirken der Positioniermittel mit den Referenzmitteln ist in Figur 2 näher erläutert. Dabei ist zu erkennen, dass die Z-Positionierpakete 51-54 jeweils auf einer Seite zueinander einen Versatz in Y-Richtung aufweisen, sodass eine Passage der jeweiligen Z-Referenzmittel beim Durchfahren des Bauteilträgerwagens 3 durch den Bereich der Arbeitsstation 4 ermöglicht ist.

Die Rollen bzw. das Rollenpaar 11 ist über den Antrieb 13 angetrieben und über eine Federung 70 (exemplarisch dargestellt) federnd gelagert. Der Bauteilträgerwagen 3 liegt mit dem Flachprofil 21 auf der Lauffläche der Rollen bzw. Rollenpaare 11 auf und wird durch diese dynamisch bewegt. Am Bauteilträgerwagen 3 sind über Winkelprofile 71 Rollen 72 angeordnet, welche in C-Profilschienen 73 an der Seite der Förderbahn 2 eingreifen. Durch den beidseitigen Eingriff ergibt sich ein Formschluss in Y- und Z-Richtung, welcher insbesondere ein Kippen des Bauteilträgerwagens 3 sowie ein Abheben von der Förderbahn 2 verhindert.

Die Positionierung in X-Richtung erfolgt über einen Abstecher 80, welcher aus der Förderbahn 2 herausfahrbar ist und in eine entsprechende Bohrung auf der Unterseite des Bauteilträgerwagens 3 eingreift. Eine konisch ausgeformte Spitze des Abstechers 80 erlaubt hierbei eine gewisse Selbstzentrierung zur Positionierung in X-Richtung.

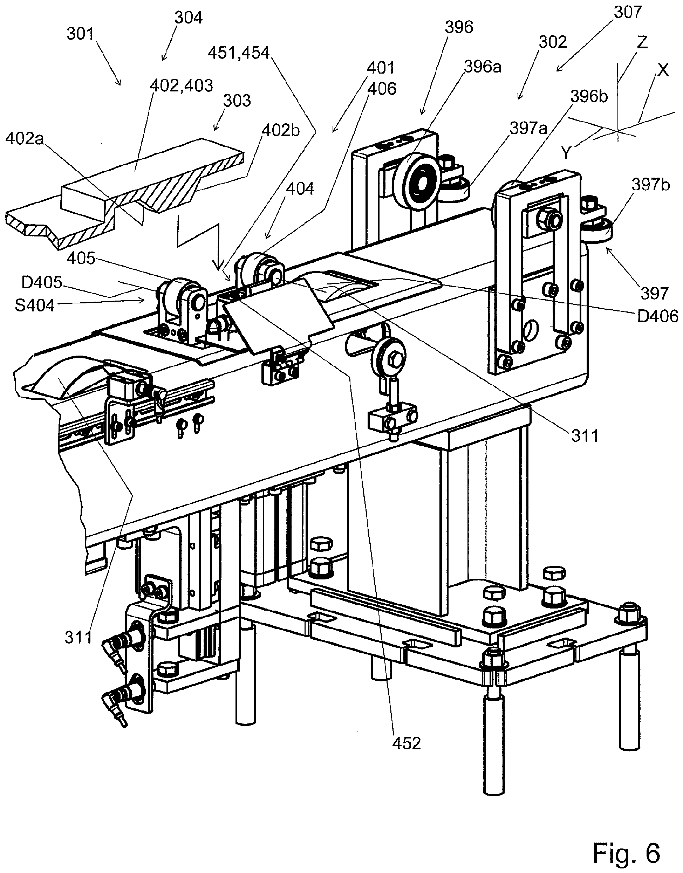

Anstelle der Abhebe- und Kippsicherung über eingreifende Rollen 72 in ein C-Profil 73 besteht auch die Möglichkeit (vorliegend nicht dargestellt) mit mehreren Rollen eine Leiste oder ein anderweitig ausgeformtes Profil derart zu umgreifen, dass lediglich die Bewegung in X-Richtung ermöglicht wird. Dies ist exemplarisch an einer in der Figur 6 dargestellten Förderbahn 302 durch zwei gegenüberliegende Z-Sicherungsrollen 396a, 396b und zwei gegenüberliegende Y-Sicherungsrollen 397a, 397b gezeigt. Durch diese jeweils ein Rollenpaar 396, 397 bildenden Sicherungsrollen wird ein nur schematisch dargestellter Bauteilträgerwagen 303 im Stillstand und in Bewegung gegen Abheben von der Förderbahn 302 und gegen seitliches Kippen gegenüber der Förderbahn 302 gesichert. Selbstverständlich sind in Längserstreckung (X-Richtung) der Förderbahn 302 weitere derartige Rollenpaare angeordnet, so dass der Bauteilträgerwagen 303 auf seinem gesamten Fahrweg gesichert ist. Unabhängig von dieser Abhebe- und Kippsicherung erfolgt in jeder Arbeitsstation 304 eine Positionierung des Bauteilträgerwagens 303 durch in der Figur 6 nicht sichtbare Z-Referenzmittel und Y-Referenzmittel, welche mit Z-Positioniermitteln und Y-Positioniermitteln des Bauteilträgerwagens 303 zusammenwirken. Dies ist vergleichbar zu den Figuren 1 bis 4 ausgeführt. In der Arbeitsstation 304 ist der Bauteilträgerwagen 303 derart positioniert, dass dieser zu den Z-Sicherungsrollen 396a, 396b und zu den Y-Sicherungsrollen 397a, 397b beabstandet ist. Ein Kontakt zu den Z-Sicherungsrollen 396a, 396b und zu den Y-Sicherungsrollen 397a, 397b ist nur möglich, wenn sich der Bauteilträgerwagen 303 in einer Transportebene und nicht in einer Positionierebene befindet.

Die Figuren 3a sowie 3b zeigen schematisch den Wechsel des positionierten Zustands der erfindungsgemäßen Fördereinrichtung 1 in den Transportzustand. Hierbei werden die Bezugszeichen analog zu den in den Figuren 1, 2 und 4 verwendeten Bezugszeichen verwendet, sind aber jeweils um 100 erhöht.

Der Bauteilträgerwagen 103 ist in Figur 3a im Bereich einer Arbeitsstation positioniert. Die Antriebsrollen 111 im Profil 110 der Förderbahn 102 sind gegen die Federung 170 durch den Bauteilträgerwagen 103, insbesondere das Flachprofil 121 derart eingedrückt, dass die Reibfläche 122 auf einer Positionierebene 190 angeordnet ist. Dieses Eindrücken wird durch das Einfahren der an den Querträgern 125 angeordneten Z-Positionierpakete 151, 152 in die Z-Referenzrolle 155, 156, welche vorliegend durch eine unterseitige und eine oberseitige Rolle gebildet werden, erreicht. Auf diese Weise ist die Z-Position eindeutig definiert, sodass die Bearbeitung einer Bauteilgruppe 191, insbesondere einer Karosserie (schematisch dargestellt) durch Industrieroboter erfolgen kann.

Figur 3b zeigt entsprechend den Transportzustand, bei welchem die Z-Positionierpakete 151, 152 noch nicht in die Z-Referenzrollen 155, 156 eingefahren sind. Das Antriebsrollenpaar 111 ist durch die Federung 170 in einer weiter nach oben ragenden Stellung angeordnet, sodass die Unterseite der Reibfläche 122 in einer Transportebene 192 oberhalb der Positionierebene 190 geführt wird.

Zur Positionierung des Bauteilträgerwagens im Bereich einer Arbeitsstation in Z-Richtung taucht dieser somit von einer höher gelegenen Transportebene 192 in eine darunterliegende Positionierebene 190 ein.

Figur 4 zeigt nochmals dargestellt den erfindungsgemäßen, in der Figur 1 gezeigten Bauteilträgerwagen 3. Auf die Beschreibung der Figur 1 wird verwiesen, entsprechende Bauteile tragen gleiche Bezugszeichen.

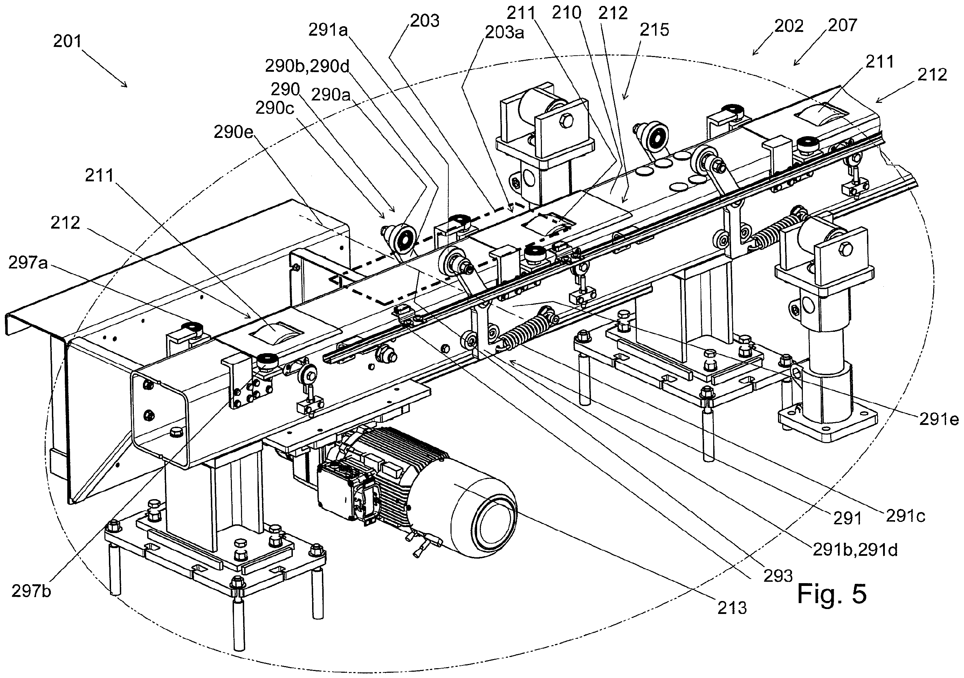

In der Figur 5 ist ein Detail einer als Einspurbahn 207 (engl. Monorail) ausgebildeten Förderbahn 202 einer zweiten Ausführungsvariante einer Fördereinrichtung 201 in perspektivischer Darstellung gezeigt. Die Förderbahn 202 ist im Bereich eines Transferabschnitts 215 gezeigt und umfasst eine Vielzahl von Niederhaltern 290, 291, von welchen nur zwei exemplarisch beschrieben und bezeichnet sind. Der Transferabschnitt 215 ist zwischen Arbeitsstationen ausgebildet und kommt in vergleichbarer Bauart insbesondere auch als Transportstation oder Leerstation oder Überbrückungsstation zum Einsatz. Jeder Niederhalter 290, 291 umfasst eine Niederhalterolle 290a, 291a und einen Rollenträger 290b, 291b, wobei die Niederhalterolle 290a, 291a mittels des Rollenträgers 290b, 291b an einem sich entlang eines Verlaufs der Förderbahn 202 erstreckenden Profil 210 angeordnet ist und wobei die Niederhalterrollen 290a, 291a derart auf Rollen 211 der Förderbahn 202 ausgerichtet sind, dass ein die Förderbahn 202 entlang fahrender, schematisch angedeuteter Bauteilträgerwagen 203 ständig zwischen mehreren Niederhalterrollen 290a, 291a und mehreren Rollen 211 führbar ist. Hierbei sind jeweils zwei Niederhalter 290, 291 an dem Profil 210 der Förderbahn 201 gegenüberliegend angeordnet. Die Rollen 211 des Transferabschnitts sind im Gegensatz zu den Rollen 211 von in den vorhergehenden Figuren gezeigten Arbeitsstationen starr bzw. ungefedert in Führungseinheiten 212 aufgenommen. Die Rollen 211 sind über einen Antrieb 213 angetrieben, wobei in dem Profil 210 ein nicht dargestelltes Triebmittel, welches insbesondere einen Zahnriemen oder eine Kette umfasst, den Antrieb 213 und die Rollen 211 verbindet.

Der Niederhalter 290, 291 umfasst auch eine Feder 290c, 291c, wobei die Niederhalterrolle 290a, 291a mittels der Feder 290c, 291c derart gegen eine Oberfläche 203a des die Förderbahn entlang fahrenden Bauteilträgerwagens 203 (schematisch dargestellt) drückbar ist, dass der Bauteilträgerwagen 203 auf die Rollen 211 gedrückt wird, auf welchen dieser aufliegt, so dass ein ausreichender Reibschluss gewährleistet ist. Der Niederhalter 290, 291 umfasst weiterhin einen Hebel 290d, 291d, wobei die Niederhalterrolle 290a, 291a mittels des Hebels 290d, 291d an dem Profil 210 der Förderbahn 201 schwenkbar um eine horizontal in Y-Richtung verlaufende Schwenkachse 290e, 291e angelenkt ist und die Feder 290c, 291c den Hebel 290d, 291d mit dem Profil 210 derart verbindet, dass diese ein Drehmomente um die Schwenkachsen 290e, 291e erzeugen, durch welche die Niederhalterrolle 290a, 291a auf den Bauteilträgerwagen 203 gedrückt werden. Hierbei sind die Hebel 290d, 291d als Kniehebel ausgebildet.

Die exemplarische beschriebenen Niederhalter 290, 291 sind ebenso wie weitere, nicht beschriebene Niederhalter paarweise gegenüberliegend angeordnet und im Bereich ihrer Schwenkachse 290e, 291e durch ein durch das Profil 211 verlaufendes Verbindungsmittel 293 verbunden, wobei die beiden Hebel 290d, 291d insbesondere derart mit dem Verbindungsmittel 293 verbunden sind, dass diese unabhängig voneinander um ihre Schwenkachsen 290e, 291e schwenkbar sind.

Durch die seitlich an dem Profil 210 angeordneten, gegenüberliegenden Y-Sicherungsrollen 297a, 297b ist der Bauteilträgerwagen 203 auch seitliche geführt, so dass sichergestellt ist, dass dieser dem Verlauf des Profils 211 des Transferabschnitts 215 folgt. Hierbei sind über den Verlauf des Profils 211 eine Vielzahl von sich gegenüber liegenden Y-Sicherungsrollen angeordnet, so das der Bauteilträgerwagen 203 auf seiner gesamten Fahrstrecke gesichert ist.

In der Figur 6 ist ein Detail der bereits erwähnten, als Einspurbahn 307 (engl. Monorail) ausgebildeten Förderbahn 302 einer dritten Ausführungsvariante einer Fördereinrichtung 301 in perspektivischer Darstellung gezeigt, wobei eine nachfolgend beschriebene Absteckeinrichtung 401 auch in einer Arbeitsstation bzw. einem Transferabschnitt einer der in den Figuren 1 bis 4 oder 5 gezeigten Fördereinrichtungen verbaut sein kann. Die Fördereinrichtung 301 repräsentiert vorliegend den Bereich einer Arbeitsstation 304 im Verlauf einer Fertigungsstraße und ist dort mit gefederten oder druckbelasteten Rollen 311 ausgestattet. Die Förderbahn 302 der Fördereinrichtung 301 umfasst die erwähnte Absteckeinrichtung 401, wobei die Absteckeinrichtung 401 einen als Schwert 402 ausgebildeten Abstecker 403 und einen Köcher 404 zur Aufnahme des Absteckers 403 umfasst. Hierbei ist der Abstecker 403 an dem nur schematisch und beabstandet von der Förderbahn 302 dargestellten Bauteilträgerwagen 303 der Fördereinrichtung 301 befestigt. Der Köcher 404 ist quer zu einer Sperrrichtung (X-Richtung) in Z-Richtung aus einer nicht dargestellten Freigabestellung, in welcher das Schwert 402 und damit der Bauteilträgerwagen 303 frei in der Sperrrichtung (X-Richtung) bewegbar ist, nach oben in eine dargestellte Sperrstellung S404 verfahrbar. In der Sperrstellung S404 ist das Schwert 402 dann - wie von einem Pfeil symbolisiert - von dem Köcher 404 aufgenommen. Der Köcher 404 umfasst zwei gegenüberliegend angeordnete Wälzkörper 405, 406, wobei Drehachsen D405, D406 der Wälzkörper 405, 406 derart quer zu der Sperrrichtung (X-Richtung) bzw. quer zu der Verfahrrichtung (X-Richtung) angeordnet sind, dass das Schwert 402 mit seinen Rückenflächen 402a, 402b reibungsarm auf den Köcher 404 zentriert wird, wenn dieser aus dem Profil 310 heraus nach oben in die Sperrstellung S404 fährt, um den Bauteilträgerwagen 303 in X-Richtung zu positionieren.

Die Fördereinrichtung 301 umfasst optional auch wenigstens eine Kupplungseinrichtung 451, wobei die Kupplungseinrichtung 451 wenigstens ein in einer der Arbeitsstationen der Fördereinrichtung 301 angeordnetes Kupplungsstück 452 und ein an dem Bauteilträgerwagen 303 montierbares Gegenkupplungsstück (nicht dargestellt) umfasst, wobei das Kupplungsstück 452 zusammen mit dem Köcher 404 der Absteckeinrichtung 401 derart verfahrbar ist, dass das Kupplungsstück 452 mit dem Gegenkupplungsstück des in der Arbeitsstation in der Arbeitsstellung stehenden Bauteilträgerwagens 303 kuppelbar ist, wobei die Kupplungseinrichtung 451 eine Medienkupplungseinrichtung 454 umfasst, mittels welcher der Bauteilträgerwagen 303 vorzugsweise mit Druckluft und/oder Elektrizität versorgbar ist.

### Bezugszeichenliste:

- 1: Förderereinrichtung
- 2: Förderbahn
- 3: Bauteilträgerwagen
- L3: Längsachse von 3
- 4: Arbeitsstation
- 5: Verlaufsrichtung
- 6: Verlaufsrichtung

- 7: Einspurbahn 7 (engl. Monorail)
- 8, 9: Stütze von 10 von 7
- 10: Profil von 7
- 11: gefederte Rollen bzw. Rollenpaar von 7
- 12: Führungseinheiten
- 13: Antrieb

- 20: zentrisch angeordnetes Hohlprofil von 3
- 21: Flachprofil von 3
- 22: Reibfläche von 21
- 23: Querträger von 3
- 24: Aufnahmemittel von 3 an 23
- 25: Querträger
- 26: Befestigungsraster von 3 an 21
- 27: Gewindebohrungen von 26
- 28: weiteres Befestigungsraster
- 29: Aufnahme von 23

- 30: Positionsmittel von 3 an 25
- 31: hinterer rechtsseitiger Querträger

- 40, 41: Y-Paket als Positioniermittel 30
- 42: Referenz-Rollenpaar (vorne links) von 4
- 43: Referenz-Rollenpaar (hinten rechts) von 4
- 44: Y-Referenzmittel gebildet durch 42 bzw. 43

- 50: Z-Positioniermittel von 3 an 25
- 51-54: Z-Pakete als Z-Positioniermittel 50
- 55-58: Z-Rolle von 4

- 60: Z-Referenzmittel als Z-Rollen 55-58

- 70: Federung von 11
- 71: Winkelprofil
- 72: Rolle von 3
- 73: C-Profilschiene von 2

- 80: Abstecker

- 102: Förderbahn
- 103: Bauteilträgerwagen
- 110: Profil
- 111: gefederte Antriebsrolle / Rolle
- 121: Flachprofil
- 122: Reibfläche

- 125: Querträger

- 170: Federung

- 151, 152: Z-Positionierpaket von 103
- 155, 156: Z-Referenzrolle

- 190: Ebene / Positionierebene
- 191: Bauteilgruppe
- 192: Transportebene

- 201: Fördereinrichtung
- 202: Förderbahn
- 203: Bauteilträgerwagen
- 203a: Oberfläche von

- 207: Einspurbahn

- 210: Profil
- 211: starre Rollen
- 212: Führungseinheiten
- 213: Antrieb

- 215: Transferabschnitt

- 290, 291: Niederhalter
- 290a, 291a: Niederhalterolle
- 290b, 291b: Rollenträger
- 290c, 291c: Feder
- 290d, 291d: Hebel
- 290e, 291e: Schwenkachse von 290d, 291d
- 293: Verbindungsmittel von 290 und 291

- 297a, 297b: Y-Sicherungsrollen

- 301: Fördereinrichtung
- 302: Förderbahn
- 303: Bauteilträgerwagen
- 304: Arbeitsstation

- 307: Einspurbahn

- 310: Profil
- 311: gefederte Rolle

- 396: Rollenpaar
- 396a, 396b: Z-Sicherungsrolle
- 397: Rollenpaar
- 397a, 397b: Y-Sicherungsrolle

- 401: Absteckeinrichtung
- 402: Schwert
- 402a, 402b: Rückenfläche
- 403: Abstecker
- 404: Köcher
- 405, 406: Wälzkörper

- D405, D406: Drehachsen der Wälzkörper
- S404: Sperrstellung

- 451: Kupplungseinrichtung
- 452: Kupplungsstück

- 454: Medienkupplungseinrichtung

## Patentansprüche

1. Fördereinrichtung (1; 201; 301) für eine automatisierte Fertigungsstraße umfassend:
- mindestens eine Förderbahn (2; 102; 202; 302) entlang eines Verlaufs der Fertigungsstraße,
- mindestens einen Bauteilträgerwagen (3; 103; 203; 303) zum Transport von Bauteilen oder Bauteilgruppen, insbesondere Karosserien, in der Fertigungsstraße,
- wobei die Fertigungsstraße Transferabschnitte (215) und Arbeitsstationen (4; 304) umfasst und diese von der Förderbahn (2; 102; 202; 302) entlang des Verlaufs der Fertigungsstraße durchlaufen werden,
**dadurch gekennzeichnet, dass**
- die Förderbahn (2; 102; 202; 302) als Einspurbahn (7), bevorzugt entlang einer zentrischen Längsachse (L3) des Bauteilträgerwagens (3; 103; 203; 303) verlaufende Einspurbahn (7; 207; 307) ausgebildet ist und
- die Förderbahn (2; 102; 202; 302) eine Mehrzahl von Rollen (11; 111; 211) aufweist, welche zumindest teilweise über Antriebe (13; 213) angetrieben sind und
- dass der Bauteilträgerwagen (3; 103; 203; 303) mindestens eine Reibfläche (22; 122) umfasst, über welche der Bauteilträgerwagen (3; 103; 203; 303) durch die Rollen (11; 111; 211) der Förderbahn (2; 102; 202; 302) antreibbar, insbesondere entlang der Förderbahn (2; 102; 202; 302) dynamisch bewegbar ist.

2. Fördereinrichtung nach Anspruch 1, **dadurch gekennzeichnet, dass**
- am Bauteilträgerwagen (3; 103; 203; 303) Positioniermittel (30; 50; 151, 152) vorgesehen sind,
- und an der Förderbahn (2; 102; 202; 302) zumindest im Bereich einer Arbeitsstation (4; 304) Referenzmittel (42, 43; 60; 155, 156; 242, 243, 244) vorgesehen sind,
- wobei die Positioniermittel (30; 50; 151, 152) am Bauteilträgerwagen (3; 103; 203; 303) und die Referenzmittel (42, 43; 60; 155, 156; 242, 243, 244) der Förderbahn (2; 102; 202; 302) derart zusammenwirken, dass der Bauteilträgerwagen (3; 103; 203; 303) in einer Arbeitsposition (190), in welcher die Bearbeitung der Bauteile oder Bauteilgruppen (191) durch wenigstens einen Manipulator vorgesehen ist, relativ zur Arbeitsstation (4; 304) in einer, vorzugsweise zwei, insbesondere drei Raumrichtungen (X; Y; Z) eindeutig positioniert ist.

3. Fördereinrichtung nach Anspruch 2, **dadurch gekennzeichnet, dass** Führungseinheiten (12; 212) umfasst sind, wobei die Rollen (11; 111; 211) der Fördereinrichtung (1; 201; 301) zumindest teilweise Bestandteile einzelner Führungseinheiten (12; 212) sind und es vorgesehen ist, dass die Rolle bzw. die Rollen (11; 111) einer Führungseinheit (12) gefederte oder druckbelastete Aufhängungen umfassen oder dass die Rolle bzw. die Rollen (211) einer Führungseinheit (212) ungefederte bzw. starre Aufhängungen umfassen, wobei die Führungseinheiten (12) vorzugsweise im Bereich einer Arbeitsstation (4; 304) angeordnet sind.

4. Fördereinrichtung nach einem der Ansprüche 2 oder 3, **dadurch gekennzeichnet, dass**
eine Positionierung entlang des Verlaufs der Förderbahn (2; 102; 202; 302) (X-Richtung) durch mindestens einen Abstecker (80; 403) erfolgt, wobei der Abstecker (80; 403) bevorzugt aus der Förderbahn (2; 102; 202; 302) herausragend in eine Aufnahme am Bauteilträgerwagen (3; 103; 203; 303) formschlüssig eingreift,
und/oder
eine Positionierung senkrecht zum Verlauf der Förderbahn (2; 102; 202; 302) (Z-Richtung) durch mindestens zwei Positioniermittel (50), insbesondere Z-Pakete (51-54; 151, 152) am Bauteilträgerwagen (3; 103; 203; 303) in Zusammenwirkung mit mindestens zwei Referenzmitteln (60), insbesondere zwei Z-Anschlägen oder Z-Rollen (55-58, 60; 155, 156) erfolgt,
wobei
insbesondere die Positioniermittel (50, 51-54) mit einer nach oben weisenden Fläche mit einer nach unten weisenden Fläche oder Rolle (55-58; 155, 156) der Referenzmittel (60) zusammenwirken
und/oder
eine Positionierung quer zum Verlauf der Förderbahn (2; 102; 202; 302) (Y-Richtung) durch mindestens zwei Abstecker erfolgt, wobei die Abstecker voneinander beabstandet sind und bevorzugt aus der Förderbahn (2; 102; 202; 302) herausragend in eine Aufnahme am Bauteilträgerwagen (3; 103; 203; 303) formschlüssig eingreifen,
und/oder
eine Positionierung quer zum Verlauf der Förderbahn (2; 102) (Y-Richtung) durch mindestens zwei Positioniermittel (30), insbesondere Y-Pakete (40, 41) am Bauteilträgerwagen (3; 103) in Zusammenwirkung mit mindestens zwei Referenzmitteln, insbesondere zwei Y-Anschlägen oder Y-Rollen (42, 43) erfolgt.

5. Fördereinrichtung nach einem der Ansprüche 2 bis 4, **dadurch gekennzeichnet, dass** die Positionierung des Bauteilträgerwagens (3; 103; 203; 303) relativ zur Arbeitsstation (4; 304) entlang einer, vorzugsweise zwei, insbesondere drei Raumrichtungen (X; Y; Z) formschlüssig ausgebildet ist, so dass insbesondere ein Abheben des Bauteilträgerwagens (3; 103; 203; 303) von der Förderbahn (2; 102; 202; 302) verhindert ist.

6. Fördereinrichtung nach einem der vorangegangenen Ansprüche, **dadurch gekennzeichnet, dass** an der Förderbahn (2; 102; 202; 302) in Längsrichtung (5, 6) verlaufend mindestens ein Profil (73), vorzugsweise zwei oder mehrere Profile (73) ausgebildet sind,
wobei mindestens eine Rolle (72), bevorzugt eine Rollenanordnung an dem Bauteilträgerwagen (3; 103; 203; 303) derart in das Profil (73) formschlüssig eingreift, dass ein Abheben des Bauteilträgerwagens (3; 103; 203; 303) von der Förderbahn (2; 102; 202; 302) und/oder ein seitlicher Versatz des Bauteilträgerwagens (3; 103; 203; 303) gegenüber der Förderbahn (2; 102; 202; 302) verhindert ist.

7. Fördereinrichtung nach einem der vorangegangenen Ansprüche 1 bis 5, **dadurch gekennzeichnet, dass** der Transferabschnitt (215) und/oder die Arbeitsstation (304) der Förderbahn (202) eine Vielzahl von Niederhaltern (290, 291) umfasst, wobei jeder Niederhalter (290, 291) eine Niederhalterolle (290a, 291a) und einen Rollenträger (290b, 291b) umfasst, wobei die Niederhalterolle (290a, 291a) mittels des Rollenträgers (290b, 291b) an einem Profil (210) der Förderbahn (202) angeordnet ist und wobei die Niederhalterrollen (290a, 291a) derart auf die Rollen (211) der Förderbahn (202) ausgerichtet sind, dass ein die Förderbahn (202) entlang fahrender Bauteilträgerwagen (203) ständig zwischen mehreren Niederhalterrollen (290a, 291a) und mehreren Rollen (211) führbar ist, wobei es insbesondere vorgesehen ist, dass jeweils zwei Niederhalter (290, 291) an dem Profil (210) der Förderbahn (202) gegenüberliegend angeordnet sind.

8. Fördereinrichtung nach Anspruch 7, **dadurch gekennzeichnet, dass** der Niederhalter (290, 291) eine Feder (290c, 291c) umfasst, wobei die Niederhalterrolle (290a, 291a) mittels der Feder (290c, 291c) derart gegen eine Oberfläche (203a) eines die Förderbahn (202) entlang fahrenden Bauteilträgerwagens (203) drückbar ist, dass der Bauteilträgerwagen (203) auf die Rollen (211) gedrückt wird, auf welchen der Bauteilträgerwagen (203) aufliegt, wobei es insbesondere vorgesehen ist, dass der Niederhalter (290, 291) einen Hebel (290d, 291d) umfasst und die Niederhalterrolle (290a, 291a) mittels des Hebels (290d, 291d) an dem Profil (210) der Förderbahn (202) schwenkbar um eine horizontal in Y-Richtung (Y) verlaufende Schwenkachse (290e, 291e) angelenkt ist und die Feder (290c, 291c) den Hebel (290d, 291d) mit dem Profil (210) derart verbindet, dass diese eine Drehmoment um die Schwenkachse (290e, 291e) erzeugt und wobei es insbesondere auch vorgesehen ist, dass zwei gegenüberliegend angeordneten Niederhalter (290, 291) im Bereich ihrer Schwenkachse (290e, 291e) durch ein Verbindungsmittel (293) verbunden sind, wobei die beiden Hebel (290d, 291d) insbesondere derart mit dem Verbindungsmittel (293) verbunden sind, dass diese unabhängig voneinander um ihre Schwenkachsen (290e, 291e) schwenkbar sind.

9. Fördereinrichtung nach wenigstens einem der vorangegangenen Ansprüche, **dadurch gekennzeichnet, dass** die Fördereinrichtung (201; 301) eine Absteckeinrichtung (401) umfasst, wobei Absteckeinrichtung (401) einen insbesondere als Schwert (402) ausgebildeten Abstecker (403) und einen Köcher (404) zur Aufnahme des Absteckers (403) umfasst, wobei der Köcher (404) quer zu einer Sperrrichtung (X-Richtung) insbesondere in Z-Richtung (Z) aus einer Freigabestellung in eine Sperrstellung (S404) verfahrbar ist, in welcher der Abstecker (403) von dem Köcher (404) aufgenommen ist, wobei es insbesondere vorgesehen ist, dass der Köcher (404) zwei gegenüberliegend angeordnete Wälzkörper (405, 406) umfasst, wobei es insbesondere vorgesehen ist, dass Drehachsen (D405, D406) der Wälzkörper (405, 406) derart quer zu der Verfahrrichtung (X) angeordnet sind, dass der Abstecker (403) reibungsarm von dem Köcher (404) aufgenommen wird, wenn dieser in die Sperrstellung (S404) fährt, wobei es insbesondere vorgesehen ist, dass der Abstecker (403) an einem Bauteilträgerwagen (203; 303) montierbar ist, welcher auf der Förderbahn (202; 302) verfahrbar ist.

10. Fördereinrichtung nach wenigstens einem der vorangegangenen Ansprüche, **dadurch gekennzeichnet, dass** die Fördereinrichtung (201; 301) wenigstens eine Kupplungseinrichtung (451) umfasst, wobei die Kupplungseinrichtung (451) wenigstens ein in einer der Arbeitsstationen der Fördereinrichtung (201; 301) angeordnetes Kupplungsstück (452) und ein an einem Bauteilträgerwagen (203; 303) montierbares Gegenkupplungsstück (453) umfasst, wobei das Kupplungsstück (452) insbesondere zusammen mit einem Köcher (404) einer Absteckeinrichtung (404) derart verfahrbar ist, dass das Kupplungsstück (452) mit dem Gegenkupplungsstück (453) des in der Arbeitsstation (304) in einer Arbeitsstellung stehenden Bauteilträgerwagens (203; 303) kuppelbar ist, wobei die Kupplungseinrichtung (451) insbesondere eine Medienkupplungseinrichtung (454) umfasst, mittels welcher der Bauteilträgerwagen (203; 303) vorzugsweise mit Druckluft und/oder Elektrizität versorgbar ist.

11. Bauteilträgerwagen (3; 103; 203; 303) für eine Fördereinrichtung (1; 201; 301) nach einem der Ansprüche 1 bis 10 umfassend:
- eine Trägerstruktur und Aufnahmemittel (24) für Bauteile oder Bauteilgruppen (191),
- wobei die Trägerstruktur mindestens einen Längsträger und wenigstens zwei seitlich, bevorzugt symmetrisch nach Art eines Lothringer Kreuzes, über den Längsträger überstehende Querträger (23, 25) umfasst,
- wobei die Aufnahmemittel (24) die Bauteile oder Bauteilgruppen (191), insbesondere eine Fahrzeugkarosserie relativ zu der Trägerstruktur eindeutig positioniert aufnehmen,
**dadurch gekennzeichnet, dass**
die Trägerstruktur ein Befestigungsraster (26; 28) umfasst, in welchem die Querträger (23, 25) an wählbarer Position (bevorzugt in X-Richtung) angeordnet und befestigt sind,
und/oder
- die Querträger (23, 25) ein Befestigungsraster (29) umfassen, in welchem die Aufnahmemittel in mindestens einer Raumrichtung (bevorzugt in Y-Richtung), insbesondere zwei Raumrichtungen (Y- und Z-Richtung) an wählbarer Position, angeordnet und befestigt sind.

12. Bauteilträgerwagen nach Anspruch 11, **dadurch gekennzeichnet, dass** das Befestigungsraster (26; 28) an der Trägerstruktur über mindestens 60%, bevorzugt 80% der Länge der Trägerstruktur ausgebildet ist.

13. Bauteilträgerwagen nach einem der Ansprüche 11 oder 12, **dadurch gekennzeichnet, dass** an mindestens einem Querträger (23, 25) sowohl mindestens ein Aufnahmemittel (24) die Bauteile oder Bauteilgruppen (191) sowie mindestens ein Positioniermittel (30; 50) zur Ausrichtung des Bauteilträgerwagens (3; 103) relativ zur Arbeitsstation (4; 304) angeordnet ist.

14. Bauteilträgerwagen nach einem der Anspruch 11 bis 13, **dadurch gekennzeichnet, dass**
- der Längsträger im Querschnitt kopfstehend T-förmig ausgebildet ist, insbesondere aus einem Hohlprofil (20) und einem vorzugsweise darunter angeordneten Flachprofil (21) gebildet ist,
- wobei das Flachprofil (21) bevorzugt beidseitig und insbesondere symmetrisch über das Hohlprofil (20) übersteht und
- wobei die dem Hohlprofil (20) gegenüberliegende Seite des Flachprofils (21) eine Reibfläche (22) bzw. Antriebsfläche bildet, welche von Rollen (11) einer Fördereinrichtung (1) antreibbar ist.

15. Verfahren zum Betrieb einer Fördereinrichtung (1; 201; 301) nach einem der Ansprüche 1 bis 10, wobei
- ein Bauteilträgerwagen (3; 103; 203; 303) auf einer Förderbahn (2; 102; 202; 302) bis in eine zu erreichende Arbeitsposition in eine Arbeitsstation (4; 304) einfährt und dabei ein
- Eintauchen aus einer horizontalen Transportebene (192), in welcher der Transport zwischen mindestens zwei Arbeitsstationen (4; 304) stattfindet, in eine unterhalb der Transportebene (192) liegende Positionierebene (190), in welcher die Bearbeitung der Bauteile oder Bauteilgruppen (191), insbesondere der Karosserie auf dem Bauteilträgerwagen (3; 103) erfolgt, stattfindet.

16. Verfahren nach Anspruch 15, **dadurch gekennzeichnet, dass** die Bewegungsdynamik einen Wechsel zwischen zwei positionierten Zuständen in den Arbeitsstationen (4; 304) unter 12s, bevorzugt zwischen 5s und 10s, insbesondere innerhalb von 6s durchführt.

## Claims

1. Conveyor device (1; 201; 301) for an automated production line comprising:
- at least one conveyor track (2; 102; 202; 302) along a course of the production line,
- at least one component carrier carriage (3; 103; 203; 303) for transporting components or component assemblies, in particular car bodies, on the production line,
- wherein the production line includes transfer portions (215) and workstations (4; 304) and these are run through by the conveyor track (2; 102; 202; 302) along the course of the production line,
**characterized in that**
- the conveyor track (2; 102; 202; 302) is configured as a monorail (7), in a preferred manner a monorail (7; 207; 307) which extends along a central longitudinal axis (L3) of the component carrier carriage (3; 103; 203; 303) and
- the conveyor track (2; 102; 202; 302) comprises a plurality of rollers (11; 111; 211) which are driven at least in part by means of drives (13; 213) and
- that the component carrier carriage (3; 103; 203; 303) includes at least one friction surface (22; 122), by means of which the component carrier carriage (3; 103; 203; 303) is drivable by the rollers (11; 111; 211) of the conveyor track (2; 102; 202; 302), in particular is movable dynamically along the conveyor track (2; 102; 202; 302).

2. Conveyor device according to Claim 1, **characterized in that**
- positioning means (30; 50; 151, 152) are provided on the component carrier carriage (3; 103; 203; 303),
- and reference means (42, 43; 60; 155, 156; 242, 243, 244) are provided on the conveyor track (2; 102; 202; 302) at least in the region of a workstation (4; 304),
- wherein the positioning means (30; 50; 151, 152) on the component carrier carriage (3; 103; 203; 303) and the reference means (42, 43; 60; 155, 156; 242, 243, 244) of the conveyor track (2; 102; 202; 302) interact in such a manner that the component carrier carriage (3; 103; 203; 303) is positioned clearly in a working position (190), in which the processing of the components or component assemblies (191) is provided by at least one manipulator, relative to the workstation (4; 304) in one, preferably two, in particular three directions in space (X; Y; Z).

3. Conveyor device according to Claim 2, **characterized in that** guide units (12; 212) are included, wherein the rollers (11; 111; 211) of the conveyor device (1; 201; 301) are at least in part component parts of individual guide units (12; 212) and it is provided that the roller or rollers (11; 111) of a guide unit (12) include spring-loaded or pressurized suspensions or that the roller or the rollers (211) of a guide unit (212) include unsprung or rigid suspensions, wherein the guide units (12) are preferably arranged in the region of a workstation (4; 304).

4. Conveyor device according to either of Claims 2 and 3, **characterized in that**
positioning along the course of the conveyor track (2; 102; 202; 302) (X direction) is effected by at least one lock pin (80; 403), wherein the lock pin (80; 403), in a preferred manner projecting out of the conveyor track (2; 102; 202; 302), engages in a positive locking manner in a receiving means on the component carrier carriage (3; 103; 203; 303)
and/or
positioning perpendicular to the course of the conveyor track (2; 102; 202; 302) (Z direction) is effected by at least two positioning means (50), in particular Z packs (51-54; 151, 152) on the component carrier carriage (3; 103; 203; 303) interacting with at least two reference means (60), in particular two Z stops or Z rollers (55-58, 60; 155, 156), wherein
in particular the positioning means (50, 51-54) interact by way of an upwardly pointing surface with a downwardly pointing surface or roller (55-58; 155, 156) of the reference means (60)
and/or
positioning is effected transversely to the course of the conveyor track (2; 102; 202; 302) (Y direction) by at least two lock pins, wherein the lock pins are spaced apart from one another and, in a preferred manner projecting from the conveyor track (2; 102; 202; 302), engage in a positive locking manner in a receiving means on the component carrier carriage (3; 103; 203; 303),
and/or
positioning is effected transversely to the course of the conveyor track (2; 102) (Y direction) by at least two positioning means (30), in particular Y packs (40, 41) on the component carrier carriage (3; 103) interacting with at least two reference means, in particular two Y stops or Y rollers (42, 43).

5. Conveyor device according to one of Claims 2 to 4, **characterized in that** the positioning of the component carrier carriage (3; 103; 203; 303) relative to the workstation (4; 304) is realized in a positive locking manner along one, preferably two, in particular three directions in space (X; Y; Z) so that, in particular, the component carrier carriage (3; 103; 203; 303) is prevented from lifting off the conveyor track (2; 102; 202; 302).

6. Conveyor device according to one of the preceding claims, **characterized in that** at least one profile (73), preferably two or multiple profiles (73) are realized on the conveyor track (2; 102; 202; 302) extending in the longitudinal direction (5, 6), wherein at least one roller (72), in a preferred manner a roller arrangement, on the component carrier carriage (3; 103; 203; 303) engages in such a way in a positive locking manner in the profile (73) that a lifting of the component carrier carriage (3; 103; 203; 303) from the conveyor track (2; 102; 202; 302) and/or a lateral offset of the component carrier carriage (3; 103; 203; 303) in relation to the conveyor track (2; 102; 202; 302) is prevented.

7. Conveyor device according to one of preceding Claims 1 to 5, **characterized in that** the transfer portion (215) and/or the workstation (304) of the conveyor track (202) includes a plurality of hold-down devices (290, 291), wherein each hold-down device (290, 291) includes a hold-down roller (290a, 291a) and a roller carrier (290b, 291b), wherein the hold-down roller (290a, 291a) is arranged on a profile (210) of the conveyor track (202) by means of the roller carrier (290b, 291b) and wherein the hold-down rollers (290a, 291a) are aligned in such a manner with respect to the rollers (211) of the conveyor track (202) that a component carrier carriage (203) moving along the conveyor track (202) is constantly guidable between multiple hold-down rollers (290a, 291a) and multiple rollers (211), wherein it is provided, in particular, that in each case two hold-down devices (290, 291) are arranged opposite one another on the profile (210) of the conveyor track (202).

8. Conveyor device according to Claim 7, **characterized in that** the hold-down device (290, 291) includes a spring (290c, 291c), wherein the hold-down roller (290a, 291a) is pressable by means of the spring (290c, 291c) in such a manner against a surface (203a) of a component carrier carriage (203) moving along the conveyor track (202) that the component carrier carriage (203) is pressed onto the rollers (211) on which the component carrier carriage (203) rests, wherein it is provided, in particular, that the hold-down device (290, 291) comprises a lever (290d, 291d) and the hold-down roller (290a, 291a) is pivotably mounted by means of the lever (290d, 291d) on the profile (210) of the conveyor track (202) so as to be pivotable about a pivot axis (290e, 291e) which extends horizontally in the Y direction (Y) and the spring (290c, 291c) connects the lever (290d, 291d) to the profile (210) in such a manner that it generates a torque about the pivot axis (290e, 291e) and wherein it is also provided, in particular, that two hold-down devices (290, 291) arranged opposite one another are connected in the region of their pivot axes (290e, 291e) by a connection means (293), wherein the two levers (290d, 291d) are connected to the connection means (293) in particular in such a manner that they are pivotable independently of one another about their pivot axes (290e, 291e).

9. Conveyor device according to at least one of the preceding claims, **characterized in that** the conveyor device (201; 301) includes a lock pin device (401), wherein the lock pin device (401) includes a lock pin (403) realized, in particular, as a sword (402) and a sheath (404) for receiving the lock pin (403), wherein the sheath (404) is movable transversely to a locking direction (X direction) in particular in the Z direction (Z) from a release position into a locking position (S404) in which the lock pin (403) is received by the sheath (404), wherein it is provided, in particular, that the sheath (404) includes two oppositely arranged rolling bodies (405, 406), wherein it is provided, in particular, that rotational axes (D405, D406) of the rolling bodies (405, 406) are arranged in such a manner transversely to the travelling direction (X) that the lock pin (403) is received in a low-friction manner by the sheath (404) when it moves into the locking position (S404), wherein it is provided, in particular, that the lock pin (403) is mountable on a component carrier carriage (203; 303) which is movable along the conveyor track (202; 302).

10. Conveyor device according to at least one of the preceding claims, **characterized in that** the conveyor device (201; 301) includes at least one coupling device (451), wherein the coupling device (451) includes at least one coupling piece (452) arranged in one of the workstations of the conveyor device (201; 301) and one counter coupling piece (453) mountable on a component carrier carriage (203; 303), wherein the coupling piece (452) is movable in particular together with a sheath (404) of a lock pin device (404) in such a manner that the coupling piece (452) is couplable with the counter coupling piece (453) of the component carrier carriage (203; 303) which is in a work position in the workstation (304), wherein the coupling device (451) includes, in particular, a media coupling device (454), by means of which the component carrier carriage (203; 303) is suppliable preferably with compressed air and/or electricity.

11. Component carrier carriage (3; 103; 203; 303) for a conveyor device (1; 201; 301) according to one of Claims 1 to 10 including:
- a carrier structure and receiving means (24) for components or component assemblies (191),
- wherein the carrier structure includes at least one longitudinal carrier and at least two cross members (23, 25) which protrude laterally beyond the longitudinal carrier, in a preferred manner symmetrically in the manner of a Cross of Lorraine,
- wherein the receiving means (24) receive the components or component assemblies (191), in particular a vehicle body, positioned clearly relative to the carrier structure,
**characterized in that**
the carrier structure includes a fastening grid (26; 28) in which the cross members (23, 25) are arranged and fastened at a selective position (in a preferred manner in the X direction),
and/or
- the cross members (23, 25) include a fastening grid (29) in which the receiving means are arranged and fastened at a selective position in at least one direction in space (in a preferred manner in the Y direction), in particular two directions in space (Y and Z directions).

12. Component carrier carriage according to Claim 11, **characterized in that** the fastening grid (26; 28) is realized on the carrier structure over at least 60%, in a preferred manner 80% of the length of the carrier structure.

13. Component carrier carriage according to either of Claims 11 and 12, **characterized in that** both at least one receiving means (24) for the components or component assemblies (191) and at least one positioning means (30; 50) for aligning the component carrier carriage (3; 103) relative to the workstation (4; 304) is arranged on at least one cross member (23, 25).

14. Component carrier carriage according to one of Claims 11 to 13, **characterized in that**
- the longitudinal carrier is realized in cross section in the manner of an upside down T, in particular is formed from a hollow profile (20) and a flat profile (21) preferably arranged beneath it,
- wherein the flat profile (21) protrudes beyond the hollow profile (20) in a preferred manner on both sides and in particular in a symmetrical manner and
- wherein the side of the flat profile (21) situated opposite the hollow profile (20) forms a friction surface (22) or drive surface which is drivable by rollers (11) of a conveyor device (1).

15. Method for operating a conveyor device (1; 201; 301) according to one of Claims 1 to 10, wherein
- a component carrier carriage (3; 103; 203; 303) on a conveyor track (2; 102; 202; 302) moves into a workstation (4; 304) until in a work position to be achieved and, in this case,
- plunging takes place from a horizontal transport plane (192), in which the transport between at least two workstations (4; 304) takes place, into a positioning plane (190), located beneath the transport plane (192), in which the processing of the components or component assemblies (191), in particular of the car body, is effected on the component carrier carriage (3; 103).

16. Method according to Claim 15, **characterized in that** the movement dynamic carries out a change between two positioned states in the workstations (4; 304) in less than 12 s, in a preferred manner between 5 s and 10 s, in particular within 6 s.

## Revendications

1. Dispositif de transport (1 ; 201 ; 301) destiné à une chaîne de production automatisée, comprenant :
- au moins un convoyeur à bande (2 ; 102 ; 202 ; 302) le long d'un tracé de la chaîne de production,
- au moins un chariot porte-pièces (3 ; 103 ; 203 ; 303) destiné à transporter des pièces ou des groupes de pièces, en particulier des carrosseries, dans la chaîne de production,
- dans lequel la chaîne de production comprend des tronçons de transfert (215) et des postes de travail (4 ; 304) et ceux-ci sont parcourus par le convoyeur à bande (2 ; 102 ; 202 ; 302) le long du tracé de la chaîne de production,
**caractérisé en ce que**
- le convoyeur à bande (2 ; 102 ; 202 ; 302) est réalisé comme un convoyeur à voie unique (7), de préférence comme un convoyeur à voie unique (7 ; 207 ; 307) s'étendant le long d'un axe longitudinal central (L3) du chariot porte-pièces (3 ; 103 ; 203 ; 303), et
- le convoyeur à bande (2 ; 102 ; 202 ; 302) présente une pluralité de galets (11 ; 111 ; 211) qui sont entraînés au moins en partie par des entraînements (13 ; 213), et
- **en ce que** le chariot porte-pièces (3 ; 103 ; 203 ; 303) comprend au moins une surface de friction (22 ; 122) par laquelle le chariot porte-pièces (3 ; 103 ; 203 ; 303) peut être entraîné par les galets (11 ; 111 ; 211) du convoyeur à bande (2 ; 102 ; 202 ; 302), pouvant en particulier être déplacé de manière dynamique le long du convoyeur à bande (2 ; 102 ; 202 ; 302).

2. Dispositif de transport selon la revendication 1, **caractérisé en ce que**
- des moyens de positionnement (30 ; 50 ; 151, 152) sont prévus sur le chariot porte-pièces (3 ; 103 ; 203 ; 303),
- et des moyens de référence (42, 43 ; 60 ; 155, 156 ; 242, 243, 244) sont prévus sur le convoyeur à bande (2 ; 102 ; 202 ; 302), au moins au niveau d'un poste de travail (4 ; 304),
- dans lequel les moyens de positionnement (30 ; 50 ; 151, 152) sur le chariot porte-pièces (3 ; 103 ; 203 ; 303) et les moyens de référence (42, 43 ; 60 ; 155, 156 ; 242, 243, 244) du convoyeur à bande (2 ; 102 ; 202 ; 302) coopèrent de telle sorte que le chariot porte-pièces (3 ; 103 ; 203 ; 303) est positionné dans une position de travail (190), dans laquelle l'usinage des pièces ou des groupes de pièces (191) par au moins un manipulateur est prévu, de manière univoque par rapport au poste de travail (4 ; 304) dans une, de préférence deux, en particulier trois directions spatiales (X ; Y ; Z) .

3. Dispositif de transport selon la revendication 2, **caractérisé en ce que** des unités de guidage (12 ; 212) sont incluses, les galets (11 ; 111 ; 211) du dispositif de transport (1 ; 201 ; 301) faisant au moins partiellement partie d'unités de guidage individuelles (12 ; 212), et il est prévu que le(s) galet(s) (11 ; 111) d'une unité de guidage (12) comprend/comprennent des suspensions amorties ou sollicitées par une pression ou **en ce que** le (s) galet(s) (211) d'une unité de guidage (212) comprend/comprennent des suspensions non amorties ou rigides, les unités de guidage (12) étant disposées de préférence au niveau d'un poste de travail (4 ; 304).

4. Dispositif de transport selon l'une quelconque des revendications 2 et 3, **caractérisé en ce qu'**un positionnement le long du tracé du convoyeur à bande (2 ; 102 ; 202 ; 302) (direction X) est effectué par au moins un jalon (80 ; 403), le jalon (80 ; 403) venant en prise par complémentarité de forme dans un logement sur le chariot porte-pièces (3 ; 103 ; 203 ; 303), de préférence en faisant saillie à partir du convoyeur à bande (2 ; 102 ; 202 ; 302),
et/ou
un positionnement est effectué perpendiculairement au tracé du convoyeur à bande (2 ; 102 ; 202 ; 302) (direction Z) par au moins deux moyens de positionnement (50), en particulier des blocs Z (51-54 ; 151, 152) sur le chariot porte-pièces (3 ; 103 ; 203 ; 303) en coopération avec au moins deux moyens de référence (60), en particulier deux butées Z ou galets Z (55-58, 60 ; 155, 156),
dans lequel
en particulier les moyens de positionnement (50, 51-54) coopèrent par une surface orientée vers le haut avec une surface ou un galet (55-58 ; 155, 156) orienté (e) vers le bas des moyens de référence (60),
et/ou
un positionnement est effectué transversalement au tracé du convoyeur à bande (2 ; 102 ; 202 ; 302) (direction Y) par aux moins deux jalons, les jalons étant espacés l'un de l'autre et venant en prise par complémentarité de forme dans un logement sur le chariot porte-pièces (3 ; 103 ; 203 ; 303), de préférence en faisant saillie à partir du convoyeur à bande (2 ; 102 ; 202 ; 302),
et/ou
un positionnement est effectué transversalement au tracé du convoyeur à bande (2 ; 102) (direction Y) par au moins deux moyens de positionnement (30), en particulier des blocs Y (40, 41) sur le chariot porte-pièces (3 ; 103) en coopération avec au moins deux moyens de référence, en particulier deux butées Y ou galets Y (42, 43) .

5. Dispositif de transport selon l'une quelconque des revendications 2 à 4, **caractérisé en ce que** le positionnement du chariot porte-pièces (3 ; 103 ; 203 ; 303) par rapport au poste de travail (4 ; 304) le long d'une, de préférence de deux, en particulier de trois directions spatiales (X ; Y ; Z) est réalisé par complémentarité de forme de façon à empêcher en particulier un soulèvement du chariot porte-pièces (3 ; 103 ; 203 ; 303) du convoyeur à bande (2 ; 102 ; 202 ; 302) .

6. Dispositif de transport selon l'une quelconque des revendications précédentes, **caractérisé en ce que** sur le convoyeur à bande (2 ; 102 ; 202 ; 302), au moins un profilé (73), de préférence deux ou plusieurs profilés (73) sont réalisés en s'étendant dans la direction longitudinale (5, 6),
dans lequel au moins un galet (72), de préférence un ensemble de galets, vient en prise par complémentarité de forme sur le chariot porte-pièces (3 ; 103 ; 203 ; 303) dans le profilé (73) de façon à empêcher un soulèvement du chariot porte-pièces (3 ; 103 ; 203 ; 303) du convoyeur à bande (2 ; 102 ; 202 ; 302) et/ou un décalage latéral du chariot porte-pièces (3 ; 103 ; 203 ; 303) par rapport au convoyeur à bande (2 ; 102 ; 202 ; 302) .

7. Dispositif de transport selon l'une quelconque des revendications précédentes 1 à 5, **caractérisé en ce que** le tronçon de transfert (215) et/ou le poste de travail (304) du convoyeur à bande (202) comprend/comprennent une pluralité de dispositif de retenue (290, 291), chaque dispositif de retenue (290, 291) comprenant un galet de retenue (290a, 291a) et un support de galet (290b, 291b), dans lequel le galet de retenue (290a, 291a) est disposé sur un profilé (210) du convoyeur à bande (202) au moyen du support de galet (290b, 291b), et dans lequel les galets de dispositif de retenue (290a, 291a) sont alignés sur les galets (211) du convoyeur à bande (202) de telle sorte qu'un chariot porte-pièces (203) se déplaçant le long du convoyeur à bande (202) peut être guidé en permanence entre plusieurs galets de retenue (290a, 291a) et plusieurs galets (211), dans lequel il est prévu en particulier que respectivement deux dispositifs de retenue (290, 291) soient disposés en opposition sur le profilé (210) du convoyeur à bande (202).

8. Dispositif de transport selon la revendication 7, **caractérisé en ce que** le dispositif de retenue (290, 291) comprend un ressort (290c, 291c), le galet de retenue (290a, 291a) pouvant être pressé au moyen du ressort (290c, 291c) contre une surface (203a) d'un chariot porte-pièces (203) se déplaçant le long du convoyeur à bande (202) de telle sorte que le chariot porte-pièces (203) est pressé contre les galets (211) sur lesquels repose le chariot porte-pièces (203), dans lequel il est en particulier prévu que le dispositif de retenue (290, 291) comprenne un levier (290d, 291d) et que le galet de retenue (290a, 291a) soit articulé au moyen du levier (290d, 291d) sur le profilé (210) du convoyeur à bande (202) de manière à pivoter autour d'un axe de pivotement (290e, 291e) s'étendant horizontalement dans la direction Y (Y), et que le ressort (290c, 291c) relie le levier (290d, 291d) au profilé (210) de telle sorte qu'il produit un couple autour de l'axe de pivotement (290e, 291e), et dans lequel il est en particulier également prévu que deux dispositifs de retenue (290, 291) disposés en opposition soient reliés au niveau de leur axe de pivotement (290e, 291e) par un moyen de raccordement (293), dans lequel les deux leviers (290d, 291d) sont reliés au moyen de raccordement (293) en particulier de façon à pouvoir pivoter autour de leurs axes de pivotement (290e, 291e) de manière indépendante l'un de l'autre.

9. Dispositif de transport selon au moins l'une des revendications précédentes, **caractérisé en ce que** le dispositif de transport (201 ; 301) comprend un dispositif de jalonnement (401), le dispositif de jalonnement (401) comprenant un jalon (403), en particulier réalisé sous forme de lame (402), et une gaine (404) destinée à loger le jalon (403), la gaine (404) pouvant être déplacée transversalement à une direction de blocage (direction X), en particulier dans la direction Z (Z) d'une position de déblocage vers une position de blocage (S404) où le jalon (403) est logé dans la gaine (404), dans lequel il est prévu en particulier que la gaine (404) comprenne deux éléments roulants (405, 406) disposés en opposition, dans lequel il est prévu en particulier que les axes de rotation (D405, D406) des éléments roulants (405, 406) soient disposés transversalement à la direction de déplacement (X) de telle sorte que le jalon (403) est logé dans la gaine (404) sans friction lorsque celle-ci se déplace vers la position de blocage (S404), dans lequel il est prévu en particulier que le jalon (403) puisse être monté sur un chariot porte-pièces (203 ; 303) qui peut être déplacé sur le convoyeur à bande (202 ; 302).

10. Dispositif de transport selon au moins l'une des revendications précédentes, **caractérisé en ce que** le dispositif de transport (201 ; 301) comprend au moins un dispositif d'accouplement (451), le dispositif d'accouplement (451) comprenant au moins une pièce d'accouplement (452) disposée sur l'un des postes de travail du dispositif de transport (201 ; 301) et une pièce d'accouplement complémentaire (453) pouvant être montée sur un chariot porte-pièces (203 ; 303), la pièce d'accouplement (452) pouvant être déplacée, en particulier conjointement avec une gaine (404) d'un dispositif de jalonnement (404), de telle sorte que la pièce d'accouplement (452) peut être accouplée à la pièce d'accouplement complémentaire (453) du chariot porte-pièce (203 ; 303) se trouvant au poste de travail (304) dans une position de travail, dans lequel le dispositif d'accouplement (451) comprend en particulier un dispositif d'accouplement d'alimentation (454) permettant d'alimenter le chariot porte-pièces (203 ; 303) de préférence en air comprimé et/ou en électricité.

11. Chariot porte-pièces (3 ; 103 ; 203 ; 303) pour un dispositif de transport (1 ; 201 ; 301) selon l'une quelconque des revendications 1 à 10, comprenant :
- une structure de support et des moyens de logement (24) pour des pièces ou des groupes de pièces (191),
- dans lequel la structure de support comprend au moins un longeron et au moins deux traverses (23, 25) dépassant du longeron de préférence de façon symétrique à la manière d'une croix de Lorraine,
- dans lequel les moyens de logement (24) logent les pièces ou groupes de pièces (191), en particulier une carrosserie de véhicule, avec un positionnement univoque par rapport à la structure de support,
**caractérisé en ce que**
la structure de support comprend une grille de fixation (26 ; 28) dans laquelle les traverses (23, 25) sont disposées et fixées dans une position au choix (de préférence dans la direction X),
et/ou
- les traverses (23, 25) comprennent une grille de fixation (29) dans laquelle les moyens de logement sont disposés et fixés dans une position au choix, dans au moins une direction spatiale (de préférence dans la direction Y), en particulier dans deux directions spatiales (les directions Y et Z).

12. Chariot porte-pièces selon la revendication 11, **caractérisé en ce que** la grille de fixation (26 ; 28) est réalisée au niveau de la structure de support sur au moins 60 %, de préférence 80 %, de la longueur de la structure de support.

13. Chariot porte-pièces selon l'une quelconque des revendications 11 et 12, **caractérisé en ce que** sur au moins une traverse (23, 25), à la fois au moins un moyen de logement (24) pour les pièces ou les groupes de pièces (191) et au moins un moyen de positionnement (30 ; 50) pour aligner le chariot porte-pièces (3 ; 103) par rapport au poste de travail (4 ; 304) sont disposés.

14. Chariot porte-pièces selon l'une quelconque des revendications 11 à 13, **caractérisé en ce que**
- le longeron est réalisé en section transversale en forme de T inversé, en particulier à partir d'un profilé creux (20) et d'un profilé plat (21) de préférence disposé sous celui-ci,
- dans lequel le profilé plat (21) dépasse de préférence des deux côtés et dépasse en particulier de manière symétrique du profilé creux (20), et
- dans lequel la face du profilé plat (21), opposée au profilé creux (20), forme une surface de friction (22) ou une surface d'entraînement qui peut être entraînée par les galets (11) d'un dispositif de transport (1).

15. Procédé destiné à faire fonctionner un dispositif de transport (1 ; 201 ; 301) selon l'une quelconque des revendications 1 à 10, dans lequel
- un chariot porte-pièces (3 ; 103 ; 203 ; 303) se déplace sur un convoyeur à bande (2 ; 102 ; 202 ; 302) dans un poste de travail (4 ; 304) jusqu'à une position de travail à atteindre, et alors,
- en sortant d'un plan de transport horizontal (192), où le transport entre au moins deux postes de travail (4 ; 304) a lieu, une immersion dans un plan de positionnement (190) situé sous le plan de transport (192), où l'usinage des pièces ou groupes de pièces (191), en particulier de la carrosserie sur le chariot porte-pièces (3 ; 103), est effectué, a lieu.

16. Procédé selon la revendication 15, **caractérisé en ce que** la dynamique de mouvement effectue un changement entre deux états positionnés sur les postes de travail (4 ; 304) en moins de 12 s, de préférence entre 5 s et 10 s, en particulier en 6 s.
